(19) **Europäisches Patentamt European Patent Office Office européen des brevets**

(11) **EP 1 985 831 B1**

(12) **EUROPEAN PATENT SPECIFICATION**

(45) Date of publication and mention
of the grant of the patent:
**25.05.2011 Bulletin 2011/21**

(51) Int Cl.:
*F02D 41/14* (2006.01)     *F02D 19/08* (2006.01)
*F02D 41/18* (2006.01)

(21) Application number: **08007472.7**

(22) Date of filing: **16.04.2008**

(54) **Fuel supply controller for flex-fuel engine**

Kraftstoffzufuhrsteuerung für einen Flex-Treibstoff-Motor

Contrôleur d'alimentation de carburant pour moteur à polycarburant

(84) Designated Contracting States:
**DE FR SE**

(30) Priority: **24.04.2007 JP 2007114785**

(43) Date of publication of application:
**29.10.2008 Bulletin 2008/44**

(73) Proprietor: **DENSO CORPORATION**
**Kariya-city,**
**Aichi-pref. 448-8661 (JP)**

(72) Inventor: **Tooyama, Naohiro**
**Kariya-city**
**Aichi-pref. 448-8661 (JP)**

(74) Representative: **Winter, Brandl, Fürniss, Hübner,**
**Röss, Kaiser, Polte - Partnerschaft**
**Bavariaring 10**
**80336 München (DE)**

(56) References cited:
**GB-A- 2 335 055**     **US-A- 4 909 225**
**US-A- 4 967 714**     **US-A- 5 267 163**
**US-A- 5 325 836**     **US-A- 5 941 217**
**US-A1- 2003 070 666**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a fuel supply controller for a flex-fuel engine which uses blended fuel as a mixture of main fuel and sub fuel. The sub fuel is different in nature from the main fuel.

JP-2003-120363A (US-6758201B2) shows a conventional fuel supply controller for a flex-fuel engine. In this controller, a concentration of blended fuel stored in the fuel tank is estimated without a concentration sensor in the fuel tank and fuel injection is controlled according to the estimated concentration. When it is detected that the fuel tank is refueled, a quantity of fuel injection is purposely varied temporarily and the concentration of blended fuel is estimated according to the air-fuel ratio behavior of exhaust gas.

A vehicle-mounted fuel supply controller for a flex-fuel engine has also been known. In this device, a concentration sensor is provided in the fuel tank to detect a blended fuel concentration defined as the ratio of main fuel to blended fuel where, for example, the main fuel is alcohol and the sub fuel is gasoline. A stoichiometric air-fuel ratio is calculated from output of the concentration sensor and a calculated quantity of blended fuel, which depends on the stoichiometric air-fuel ratio, is supplied to the combustion chamber.

In the above conventional controller, if the concentration of blended fuel changes due to refueling the fuel tank with only main fuel or sub fuel, the following problem may arise.

Even if the concentration of blended fuel in the fuel tank changes, the concentration of blended fuel in the air-fuel mixture introduced into the combustion chamber does not change immediately. Since in the fuel path from the fuel tank to the injector there remains blended fuel of which concentration is unchanged, the concentration of blended fuel supplied to the combustion chamber is unchanged at least until that such remaining fuel is all injected into the combustion chamber through the injector. Hence, after refueling, it takes time for the concentration of blended fuel supplied to the combustion chamber to change actually. For this reason, in the conventional art, when a calculated quantity of blended fuel depending on the stoichiometric air-fuel ratio calculated from concentration sensor output is supplied (injected) through the injector, the stoichiometric air-fuel ratio cannot be met until the concentration of actually injected blended fuel becomes equal to the concentration used in the stoichiometric air-fuel ratio calculation. This causes emission deterioration.

Document GB 2 335 055 A relates to the compensation for sensor location in an internal combustion engine mixed fuel supply system in which a fuel blend sensor measures fuel properties indicative of a proper stoichiometric aire/fuel ratio. A controller adjusts the quantity of fuel injected by injectors based on the fuel blend sensor and mass air flow sensor. In the preferred embodiment, the controller only uses the stoichiometric aire/fuel ratio corresponding to the quantity of fuel entering the engine.

The present invention has been made in view of the above circumstances and an object thereof is to provide a fuel supply controller for a flex-fuel engine which minimizes emission deterioration regardless of a significant change in blended fuel concentration.

This object is solved by the subject-matter of claim 1.

In order to achieve the above object, according to one aspect of the invention, there is provided a fuel supply controller for a flex-fuel engine which uses blended fuel as a mixture of main fuel and sub fuel, the sub fuel being different in nature from the main fuel, The engine has a concentration sensor which is located in a fuel path for supply of the blended fuel to an injector or in a fuel tank connected with the fuel path to store the blended fuel and detects a concentration as a ratio of the main fuel to the blended fuel.

The fuel supply controller includes: a supply calculation section which calculates the quantity of blended fuel to be supplied to a combustion chamber from a concentration detected by the concentration sensor; a supply control section which supplies blended fuel in the quantity calculated by the supply calculation section to the combustion chamber through the injector; a concentration change determination section which determines whether a significant change has occurred in the concentration detected by the concentration sensor; and a remaining- fuel supply determination section which, when the significant change has been acknowledged by the concentration change determination section, determines whether remaining blended fuel with a concentration before the acknowledgement, has been supplied to the flex-fuel engine through the injector in a prescribed quantity depending on the location of the concentration sensor.

When the remaining fuel supply determination section determines that the remaining fuel has been supplied, the supply calculation section changes the concentration of the blended fuel for use in calculation of the supply quantity from the concentration before the acknowledgement of the significant change to a concentration after the acknowledgement and then calculates the quantity of blended fuel to be supplied to the combustion chamber.

In this fuel supply controller, if the fuel tank is refueled with only main fuel or sub fuel, first the concentration detected by the concentration sensor located in the fuel path or fuel tank changes. If a significant change in the concentration of blended fuel occurs in this way, the concentration change determination section acknowledges the significant change.

Even if the significant change in the concentration of blended fuel is acknowledged, the concentration of blended fuel in the air-fuel mixture introduced into the combustion chamber does not change immediately. The concentration of blended fuel in the air-fuel mixture supplied to the combustion chamber is unchanged at least until the remaining fuel of which concentration is the concentration before the acknowledgement is injected through the injector in a prescribed quantity depending on the location of the concentration sensor.

In the present invention, the remaining fuel supply determination section determines whether the remaining fuel has been supplied (injected) or not. Then, after acknowledgement of the significant change, the supply calculation section calculates the quantity of blended fuel to be supplied to the combustion chamber, from the concentration before the significant change in the period until it is determined that the remaining fuel has been supplied. After it is determined that the remaining fuel has been supplied, the supply calculation section calculates the quantity of blended fuel to be supplied to the combustion chamber, from the concentration after the change.

This reduces the difference between the blended fuel concentration used in calculation of the quantity of blended fuel to be supplied to the combustion chamber and the concentration of blended fuel actually supplied to the combustion chamber. Therefore, before the concentration of blended fuel actually supplied to the combustion chamber becomes equal to the concentration used in the calculation, it is less likely that the stoichiometric air-fuel ratio fails to be met, resulting in emission deterioration. Thus, even if there is a significant change in the concentration of blended fuel, emission deterioration is reduced more effectively.

The time required to supply the remaining fuel largely depends on engine operating conditions and the capacity of the fuel path (i.e. the quantity of remaining fuel). For example, if high engine power is expected and the fuel path capacity is small, a large quantity of blended fuel is consumed and the quantity of remaining fuel is small and thus the time required to supply the remaining fuel is short. Contrarily, if high engine power is not expected and the fuel path capacity is large, the required quantity of blended fuel is small and the quantity of remaining fuel is large and thus the time required to supply the remaining fuel is long.

Preferably, when the concentration change determination section acknowledges the significant change, the remaining fuel supply determination section determines that the remaining fuel has been supplied, provided that a first threshold period has elapsed from the time of the acknowledgement.

If the first threshold period is shorter than the time required to supply the remaining fuel, the following effect is brought about.

In the first threshold period which starts from acknowledgement of a significant change, the supply calculation section calculates the quantity of blended fuel to be supplied to the combustion chamber, from the concentration before the change. In this period, the concentration used in supply quantity calculation (concentration before the change) is equal to the concentration of blended fuel actually supplied to the combustion chamber. After the elapse of the first threshold period from acknowledgement of the significant change, the supply calculation section calculates the quantity of blended fuel to be supplied to the combustion chamber, from the concentration after the change. In this case, the concentration used in supply quantity calculation (concentration after the change) is different from the concentration of blended fuel actually supplied to the combustion chamber until the time required to supply the remaining fuel elapses. However, after the elapse of the time, the concentration used in supply quantity calculation becomes equal to the concentration of blended fuel actually supplied to the combustion chamber. While in the prior art the emission deterioration period is the period from when the concentration of blended fuel begins to change until all remaining fuel is supplied and the concentration stops to change, in the above aspect of the invention the emission deterioration period is that period minus the first threshold period. In other words, in the above aspect of the invention, the emission deterioration period is shorter.

Preferably the first threshold period is predetermined as longer than the time required to supply the remaining fuel with the flex-fuel engine at its maximum output.

The quantity of remaining fuel, which depends on the location of the concentration sensor, can be previously measured. When the flex-fuel engine is at its maximum output, the largest quantity of blended fuel is required and the fuel is consumed most quickly. This speed can be previously measured and the shortest time required to supply the remaining fuel can be calculated in advance from the quantity of remaining fuel and the fuel consumption speed which are estimated in this way. Hence, by setting the first threshold period to a time longer than the abovementioned shortest time, emission deterioration is reduced reliably.

Although the time required to supply the remaining fuel is largely influenced by operating conditions of the engine, the quantity of air required to burn/consume the supplied remaining fuel in the combustion chamber is almost constant. Hence, after the concentration change determination section acknowledges the significant change, the remaining fuel supply determination section may determine that the remaining fuel has been supplied, provided that the integrated quantity of air introduced into the combustion chamber exceeds a second threshold quantity. This improves the accuracy in estimating the time when the remaining fuel has been supplied. Also the blended fuel concentration used in supply quantity calculation is updated more adequately and the emission deterioration period is thus shortened.

The remaining fuel supply determination section may calculate the intake air flow rate required for the flex-fuel engine to burn/consume the remaining fuel, from output of the concentration sensor before acknowledgement of the significant change and deem the calculated intake air flow rate the second threshold quantity.

After the concentration change determination section acknowledges the significant change, the remaining fuel supply determination section may determine that the remaining fuel has been supplied, provided that integration of the supply quantity calculated by the supply calculation section exceeds a third threshold quantity. Since this improves the accuracy in estimating the time when the remaining fuel has been supplied, the blended fuel concentration used in supply quantity calculation is updated more adequately and the emission deterioration period is shortened.

It is preferable that the third threshold quantity be predetermined as equivalent to the capacity of the fuel path from the concentration sensor to the combustion chamber or from the junction between the fuel tank and fuel path to the combustion chamber, plus a margin.

When air-fuel ratio feedback control is under way, a decision about supply of remaining fuel can be made as follows. The flex-fuel engine has an air fuel ratio sensor to detect an air-fuel ratio of blended fuel used for combustion in the combustion chamber. When the concentration change determination section acknowledges the significant change and prescribed air-fuel ratio feedback conditions are fulfilled, the remaining fuel supply determination section determines that the remaining fuel has been supplied, provided that a significant change has occurred in the air-fuel ratio detected by the air-fuel ratio sensor. When the remaining fuel supply determination section determines that the remaining fuel has been supplied, the supply calculation section changes the concentration of the blended fuel for use in determination of a target air-fuel ratio for the blended fuel and calculation of supply quantity to maintain the target air-fuel ratio, from the concentration before acknowledgement of the significant change to a concentration after the acknowledgement. This makes it possible to know accurately when the remaining fuel has been supplied.

When the concentration change determination section acknowledges the significant change and the air-fuel ratio feedback conditions are fulfilled, the remaining fuel supply determination section may determine that the remaining fuel has been supplied, provided that the period in which a significant change in the air-fuel ratio detected by the air-fuel ratio sensor continues exceeds a fourth threshold period. This makes it possible to know more accurately the time when the remaining fuel has been supplied.

It is preferable that the fourth threshold period be predetermined as shorter than time required to supply the remaining fuel when the flex-fuel engine is idling.

In the fuel supply controller thus designed, it is at earliest when the fourth threshold period has elapsed from the time of occurrence of a significant change in output of the air-fuel ratio sensor that the blended fuel concentration used in calculation of the quantity of blended fuel to be supplied to the combustion chamber is updated. Hence, before the elapse of the fourth threshold period, the concentration used in the calculation is different from the concentration of blended fuel actually supplied to the combustion chamber (concentration after the change).

In the prior art, the emission deterioration period is from when the blended fuel concentration begins to change until supply of the remaining fuel is finished and the concentration stops to change. On the other hand, in the above system, the emission deterioration period is at longest the fourth threshold period. Namely, the emission deterioration period can be shortened. In addition, in the above system, it is possible to determine regardless of the quantity of remaining fuel that the remaining fuel has been supplied.

In the engine starting period, the air-fuel ratio sensor is not activated yet and air-fuel ratio feedback control cannot be made. Also, if the air-fuel ratio sensor is out of order, as a fail-safe measure the output value of the air-fuel ratio sensor is fixed to a given value and air-fuel ratio feedback control cannot be made. As a fail-safe measure in case that the air-fuel ratio feedback conditions are not fulfilled, when the concentration change determination section acknowledges the significant change and the air-fuel ratio feedback conditions are not fulfilled, the remaining fuel supply determination section may determine that the remaining fuel has been supplied, provided that a first threshold period has elapsed from the time of the acknowledgement.

When the concentration change determination section acknowledges the significant change and the air-fuel ratio feedback conditions are not fulfilled, after the acknowledgement the remaining fuel supply determination section may determine that the remaining fuel has been supplied, provided that the integrated quantity of air introduced into the combustion chamber exceeds a second threshold quantity. Furthermore, when the concentration change determination section acknowledges the significant change and the air-fuel ratio feedback conditions are not fulfilled, after the acknowledgement the remaining fuel supply determination section may determine that the remaining fuel has been supplied, provided that integration of the supply quantity calculated by the supply calculation section exceeds a third threshold quantity.

The supply calculation section may further include: a basic supply calculation part which calculates a basic supply quantity of sub fuel to the combustion chamber according to engine operating conditions including the quantity of air taken into the engine and engine coolant temperature; a supply conversion part which converts the basic supply quantity into a converted supply quantity as a quantity of the blended fuel to be supplied to the combustion chamber; a memory which stores a learning value used in conversion of the basic supply quantity into the converted supply quantity; a learning value updating part which, upon acknowledgement of supply of the remaining fuel, updates the learning value from the output value of the concentration sensor before acknowledgement of the significant change to the output value of the concentration sensor after the acknowledgement of the significant change; and an air-fuel ratio adjustment part which, when the air-fuel ratio feedback conditions are fulfilled, adjusts the converted supply quantity to a final supply quantity to maintain the air-fuel ratio of the blended fuel at a stoichiometric air-fuel ratio. Here, it may be that when the air-fuel ratio feedback conditions are fulfilled, the supply control section supplies blended fuel in the final supply quantity to the combustion chamber, and when the air-fuel ratio feedback conditions are not fulfilled, it supplies blended fuel in the converted supply quantity to the combustion chamber.

The concentration change determination section may load output of the concentration sensor at a fifth threshold time interval and acknowledges the significant change provided that the difference between the loaded sensor output value and the learning value exceeds a sixth threshold.

The sub fuel may be more combustible than the main fuel.

The invention will be more particularly described with reference to the accompanying drawings, in which:

Fig. 1 is a schematic diagram showing a general structure of a flex-fuel engine and a configuration of its fuel supply controller according to a first embodiment of the invention;
Fig. 2 shows a relation between blended fuel alcohol concentration and injection increase coefficient;
Fig. 3 is a flowchart which shows a process of updating a stored learning value;
Fig. 4 is a timing chart which shows changes in the alcohol concentration of blended fuel stored in the fuel tank, the actual alcohol concentration of blended fuel injected to the combustion chamber, and the learning value stored in a memory according to the first embodiment;
Fig. 5 is a flowchart which shows a fuel supply process according to a modification of the first embodiment;
Fig. 6 is a timing chart which shows changes in the alcohol concentration of blended fuel stored in the fuel tank, the actual alcohol concentration of blended fuel injected to the combustion chamber, and the learning value stored in the memory according to a modification of the first embodiment;
Fig. 7 is a flowchart which shows a fuel supply process in another modification of the first embodiment;
Fig. 8 is a flowchart which shows a process of updating the learning value stored in the memory according to a second embodiment of the invention;
Fig. 9 is a flowchart which shows the a fuel supply process according to a modification of the second embodiment;
Fig. 10 is a flowchart which shows a process of updating the learning value stored in the memory according to a third embodiment of the invention; and
Fig. 11 is a flowchart which shows a fuel supply process according to a modification of the third embodiment.

[First Embodiment]

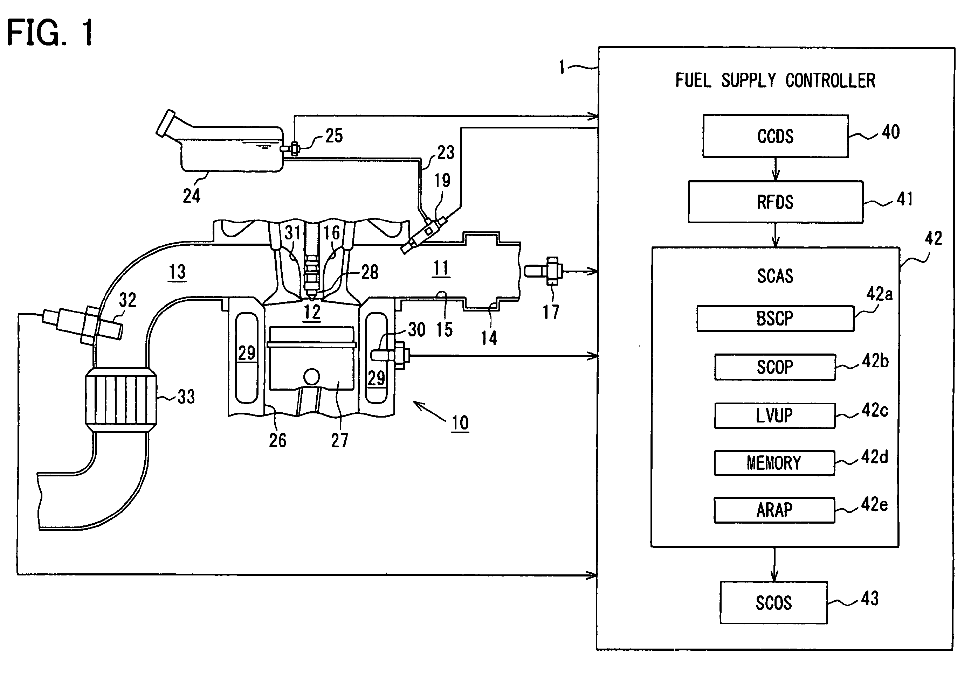

A fuel supply controller for a flex-fuel engine according to a first embodiment of the present invention will be described referring to Figs. 1 to 4.

Fig. 1 shows a general structure of the flex-fuel engine and a configuration of its fuel supply controller. The flex-fuel engine is designed to be mounted in a vehicle and is supplied with blended fuel, for example, a mixture of alcohol (main fuel) and gasoline (sub fuel). In other words, this embodiment uses sub fuel which is more combustible than main fuel.

As indicated in Fig. 1, the flex-fuel engine 10 basically includes: an intake pipe 11 for intake fresh air from outside; a combustion chamber 12 in which an air-fuel mixture (mixture of blended fuel and fresh air) is burned; and an exhaust pipe 13 through which exhaust gas flows.

The intake pipe 11 is divided into sub-pipes to cylinders by an intake manifold 15 downstream of a surge tank 14 and each sub-pipe is connected to the combustion chamber 12 of the corresponding cylinder through an intake port 16. In the intake pipe 11, an intake air temperature sensor 17 for detecting the air temperature inside the intake pipe 11 is located upstream of the surge tank 14 and also an injector 19 which injects blended fuel is located for the intake port 16 of each cylinder. Furthermore, in the intake pipe 11, an air flow meter (not shown) which successively detects an intake air flow rate is provided for each intake port 16. The blended fuel to be supplied by the injector 19 is pumped up from a fuel tank 24 connected with the injector 19 through a fuel path 23 by a fuel pump (not shown). The fuel tank 24 is provided with an alcohol concentration sensor 25. This alcohol concentration sensor 25, which has a known structure, measures the alcohol concentration as the ratio of alcohol to blended fuel by detecting the capacitance of blended fuel stored in the fuel tank 24. An ignition plug 28 which sparks to ignite the air-fuel mixture is provided on the upper face of the combustion chamber 12. A water jacket 29 is formed on the side wall of the cylinder 26 as a flow channel for coolant. The water jacket 29 is provided with a water temperature sensor 30 which detects the temperature of coolant flowing therethrough.

The exhaust pipe 13 is connected through an exhaust port 31 to the combustion chamber 12. The exhaust pipe 13 is provided with an air-fuel ratio sensor 32 which detects the air-fuel ratio of air fuel mixture used for combustion in the combustion chamber 12 based on the oxygen content of exhaust gas flowing therein and a catalyst 33 which cleans exhaust gas.

The flex-fuel engine 10 is controlled by an engine control device. The engine control device basically includes: a central processing unit (CPU) which executes various computing processes related to engine control; a memory which stores various programs and data for use in control of the CPU; and a drive circuit (not shown) for driving a fuel pump (not shown) and the injector 19. The engine control device controls fuel supply through the injector 19. This fuel supply control is conducted by the CPU executing the programs stored in the memory. A section of the engine control device which actually performs the fuel supply control is hereinafter referred to as a fuel supply controller 1.

As shown in Fig. 1, the fuel supply controller 1 is connected not only with the drive circuit for the injector 19 and fuel pump (not shown) but also with various sensors which detect operating conditions of the engine, such as the water temperature sensor 30 and air-fuel ratio sensor 32. Results of detection by these sensors are used for various processing tasks.

The fuel supply controller 1 basically includes a concentration change determination section 40, which will be referred to as a CCDS 40, a remaining fuel supply determination section 41, which will be referred to as a RFDS 41, a supply calculation section 42, which will be referred to as a SCAS 42, and a supply control section 43, which will be referred to as a SCOS 43.

The CCDS 40 constantly monitors output of the alcohol concentration sensor 25 and determines if there is a significant change in the alcohol concentration of blended fuel stored in the fuel tank 24. If the fuel tank 24 is refueled with only alcohol or only gasoline or blended fuel with a mixture ratio of alcohol and gasoline different from that of blended fuel in the fuel tank 24, the alcohol concentration of blended fuel in the fuel tank 24 will suddenly change. The CCDS 40 loads output of the alcohol concentration sensor 25 at a prescribed time interval (fifth threshold period) repeatedly and saves it in a memory 42d each time. When the difference between the current output value of the alcohol concentration sensor 25 and the alcohol concentration sensor 25 output value (learnt concentration value) previously loaded and stored is, for example, more than 10% (sixth threshold), the CCDS 40 determines that a significant change has occurred. If it acknowledges that a significant change has occurred, the CCDS 40 notifies the RFDS 41 (which will be detailed later) thereof. In this embodiment, even if the engine 10 has finished operation, the learning values stored in the memory 42d are not erased but held.

Upon receiving notification of the significant change in output of the alcohol concentration sensor 25 from the CCDS 40, the RFDS 41 determines whether the blended fuel remaining in the fuel path 23 extending from the fuel tank 24 to the combustion chamber 12 has all been supplied (injected) by the injector 19.

As shown in Fig. 1, the SCAS 42 includes a basic supply calculation part (BSCP) 42a, a supply conversion part (SCOP) 42b, a learning value updating part (LVUP) 42c, a memory 42d, and an air-fuel ratio adjustment part (ARAP) 42e. Basically it calculates the quantity of blended fuel to be supplied to the combustion chamber 12 under air-fuel ratio feedback control while the flex-fuel engine 10 is in operation after warming up. In air-fuel ratio feedback control, the quantity of blended fuel to be injected into the combustion chamber 12 by the injector 19 is calculated from output of the air-fuel ratio sensor 32 so that the air-fuel ratio of the air-fuel mixture reaches a desired value (target air-fuel ratio).

The BSCP 42a calculates a basic supply quantity Tm of sub fuel to the combustion chamber 12 according to the intake air flow rate QA and the temperature of engine coolant THW. The BSCP 42a calculates the intake air flow rate QA from output of the air flow meter and calculates water temperature adjustment term FWL from output of the water temperature sensor 29. The BSCP 42a calculates the basic supply quantity Tm, using fuel injection quantity conversion constant TINJ with respect to the intake air flow rate QA, in accordance with the following equation:

$$\text{Basic supply quantity Tm} = \text{Intake air flow rate QA} \times \text{Fuel injection quantity conversion}$$
$$\text{constant TINJ} \times \text{Water temperature adjustment term FWL}$$

This is just one example of the method for calculating the basic supply quantity Tm. The invention is not limited thereto and any known calculation method may be used.

The basic supply quantity Tm calculated by the BSCP 42a is based on the assumption that the alcohol concentration is 0%, namely gasoline 100% fuel is supplied by injection. Actually, however, there are few cases that blended fuel supplied to the fuel tank 24 has a gasoline concentration of 100% and even when blended fuel with a different alcohol concentration is supplied in the basic supply quantity Tm, the desired engine output power cannot be achieved.

For this reason, basic supply quantity Tm must be converted into a quantity which depends on the alcohol concentration of actually supplied blended fuel. Since the main fuel (alcohol) is less combustible than the sub fuel (gasoline), if an engine output power level is to be attained, the higher the alcohol concentration of blended fuel is, the more blended fuel must be supplied to the combustion chamber 12.

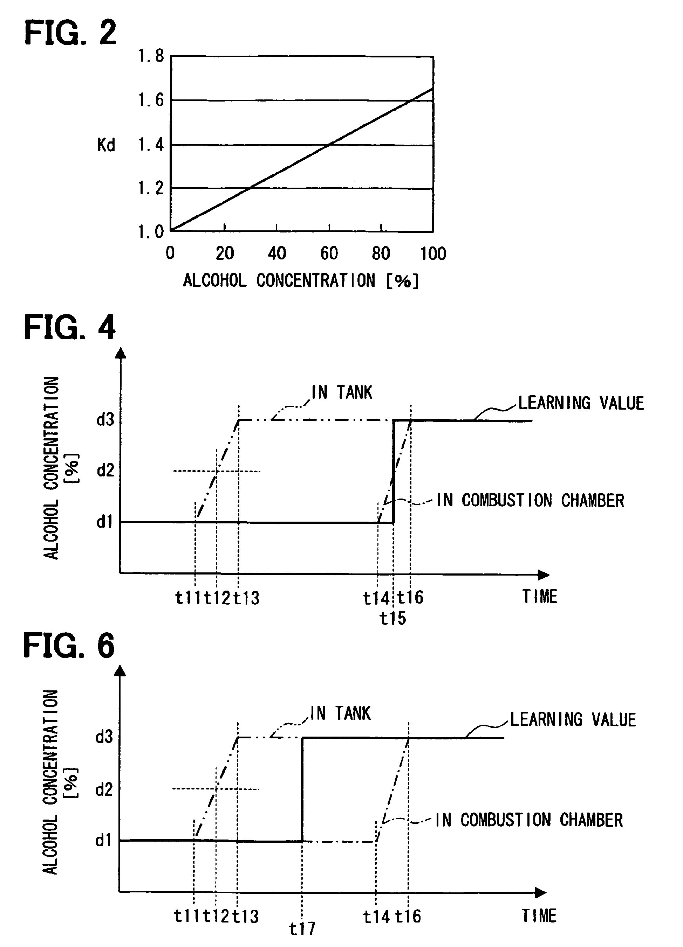

In this embodiment, the SCOP 42b acquires the output value of the alcohol concentration sensor 25 (specifically the learning value stored in the memory 42d) and injection increase coefficient Kd from the relation graph stored in the memory 42d, which is shown in Fig. 2. Further, the SCOP 42b converts basic supply quantity Tm as the quantity of sub fuel to be supplied to the combustion chamber 12 into converted supply quantity Tc as the quantity of blended fuel to be supplied to the combustion chamber 12, in accordance with the following conversion equation:

$$\text{Converted supply quantity Tc} = \text{Basic supply quantity Tm} \times \text{Injection increase coefficient Kd}$$

Fig. 2 shows the relation between blended fuel alcohol concentration and injection increase coefficient Kd. Blended fuel with an alcohol concentration of 100% means a mixture of 100% main fuel and 0% sub fuel and when this blended fuel is supplied to intake air by the injector 19, the injection increase coefficient Kd is 1.65 as shown in Fig. 2. Hence, the converted supply quantity Tc is calculated as approximately 1.65 times as much as the basic supply quantity Tm. This value is the quotient of stoichiometric air-fuel ratio 14.7 for injected blended fuel with a sub fuel ratio of 100% divided by stoichiometric air-fuel ratio 8.9 for injected blended fuel with a main fuel ratio of 100%.

The blended fuel with an alcohol concentration of 0% means a mixture of 0% main fuel and 100% sub fuel and supply of this blended fuel to intake air by the injector 19 means supply of blended fuel with a gasoline concentration of 100% to intake air by the injector 19, which is equivalent to the assumption on which the BSCP 42a calculates the basic supply quantity Tm. In this case, no conversion is necessary and the injection increase coefficient Kd is 1.0 as shown in Fig. 2. In other words, the converted supply quantity Tc is equal to the basic supply quantity Tm.

Blended fuel with an alcohol concentration of 30% means a mixture of 30% main fuel and 70% sub fuel and when this blended fuel is supplied to intake air by the injector 19, the injection increase coefficient Kd is 1.2 as shown in Fig. 2. The converted supply quantity Tc is calculated as approximately 1.2 times as much as the basic supply quantity Tm. The SCOP 42b converts the basic supply quantity Tm into converted supply quantity Tc according to output of the alcohol concentration sensor 25, the virtually linear relation between alcohol concentration and injection increase coefficient Kd as shown in Fig. 2, and the above conversion equation. Even when the alcohol concentration of blended fuel changes, the desired engine output power which would be achieved by injection of blended fuel with a gasoline concentration of 100% in the basic supply quantity Tm will be achieved actually.

Even when there is a concentration change in the blended fuel in the fuel tank 24, the blended fuel introduced into the combustion chamber 12 which constitutes air-fuel mixture does not change immediately. Since some blended fuel with an old concentration (concentration before the change) remains in the fuel path 23 extending from the fuel tank 24 to the injector 19, the concentration of blended fuel supplied to the combustion chamber 12 remains unchanged at least until that remaining fuel is all injected to intake air by the injector. Therefore, the learning value updating part 42c updates the learning value stored in the memory 42d from the output value of the alcohol concentration sensor 25 (equivalent to the old concentration value) loaded before acknowledgement of the significant change, to the output value of the alcohol concentration sensor 25 (equivalent to the concentration after the change) loaded after the above acknowledgement.

Provided that prescribed air-fuel ratio feedback conditions are fulfilled, the ARAP 42e adjusts the converted supply quantity Tc to final supply quantity TAU, which ensures that the exhaust gas of the flex-fuel engine 10 is maintained at the stoichiometric air-fuel ratio according to output of the air-fuel ratio sensor 32.

The feedback conditions may be, for example, that the following conditions should be all fulfilled: "the flex-fuel engine 10 is not in the starting stage," "temporary stop of blended fuel supply to the combustion chamber 12 is not under way," "the engine is not in a high-load mode where the quantity of blended fuel supplied to the combustion chamber 12 is temporarily increased," "the engine cooling water temperature THW is zero degree or higher," and "the air-fuel ratio sensor 32 is active." Once these air-fuel ratio feedback conditions are fulfilled, the ARAP 42e calculates the final supply quantity TAU in accordance with the following equation:

$$\text{Final supply quantity TAU} = \text{Converted supply quantity Tc} \times \text{air-fuel ratio adjustment factor Kaf}.$$

This is just one example of the method for calculating final basic supply quantity TAU. The invention is not limited thereto and any known calculation method may be used.

When the above air-fuel ratio feedback conditions are fulfilled, the SCOS 43 injects blended fuel in the final supply quantity TAU calculated by the SCAS 42 to intake air by activating the injector 19 and the fuel pump (not shown). The air-fuel mixture prepared in this way is introduced into the combustion chamber 12 and blended fuel in the final supply quantity TAU is thus supplied to the combustion chamber 12. Consequently, in the flex-fuel engine 10, while it is in operation after warming up, air-fuel ratio feedback control is under way and output of the air-fuel ratio sensor 32 stay stable in the vicinity of the target air-fuel ratio, slightly rich or slightly lean from time to time. Unless the above air-fuel ratio feedback conditions are fulfilled, the SCOS 43 injects blended fuel in the converted supply quantity Tc calculated by the SCAS 42 to intake air by activating the injector 19 and the fuel pump (not shown). The air-fuel mixture prepared in this way is introduced into the combustion chamber 12 and blended fuel in the converted supply quantity Tc is thus supplied to the combustion chamber 12.

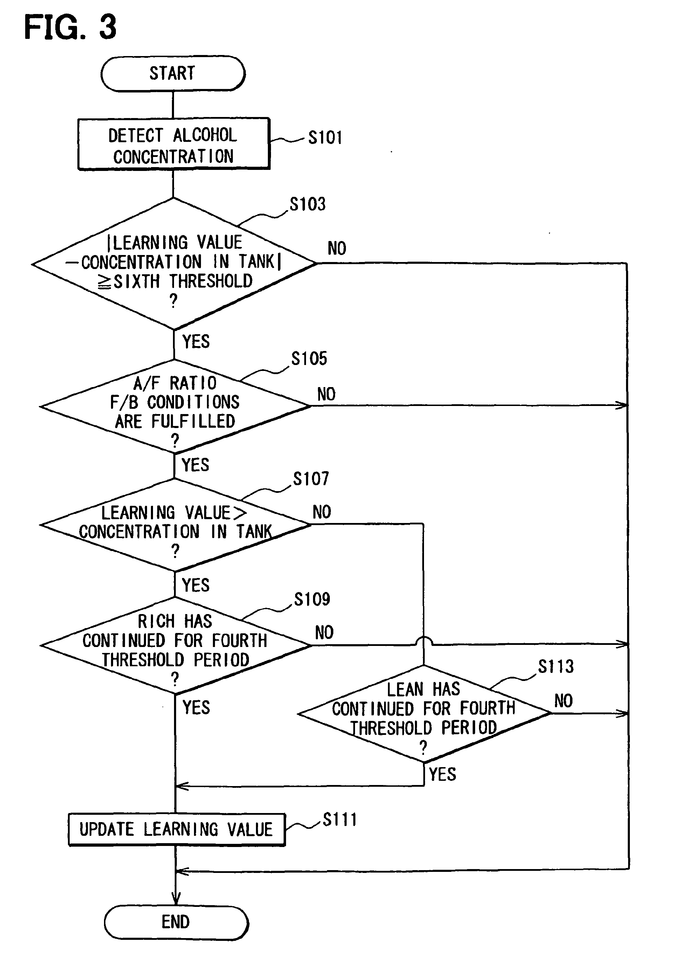

Fig. 3 shows a process of updating the learning value stored in the memory 42d. This learning value updating process is repeated at a prescribed time interval (fifth threshold period).

The CCDS 40 determines whether a significant change in output of the alcohol concentration sensor 25 has occurred, through Step S101 and Step 103 as follows. At Step 101, the CCDS 40 loads the sensor output value from the alcohol concentration sensor 25 to detect the alcohol concentration of blended fuel in the fuel tank 24. At Step 103, the CCDS 40 determines whether the difference between the learning value stored in the memory 42d and the sensor output value loaded from the alcohol concentration sensor 25 (current value) is more than 10% (sixth threshold).

If there is no drastic change in output of the alcohol concentration sensor 25 (NO at Step S103), the CCDS 40 determines that there is no significant change in output of the alcohol concentration sensor 25. Then the LVUP 42c once ends this process without updating the learning value stored in the memory 42d.

If the answer is YES at Step S103, a drastic change has occurred in output of the alcohol concentration sensor 25 and the CCDS 40 acknowledges that there is a significant change in output of the alcohol concentration sensor 25 and notifies the RFDS 41 thereof. Even if the concentration of blended fuel in the fuel tank 24 changes, the concentration of blended fuel in the air-fuel mixture introduced into the combustion chamber 12 does not change immediately. Since in the fuel path 23 from the fuel tank 24 to the injector 19 there remains blended fuel of which concentration remains unchanged, the concentration of blended fuel supplied to the combustion chamber 12 is unchanged at least until that remaining fuel is all injected by the injector 19. This means that after the significant change, it takes time for the concentration of blended fuel supplied to the combustion chamber 12 to change actually. It is difficult to accurately predict how long it takes because it depends on the operating condition of the flex-fuel engine 10.

Upon receiving notification of the significant change, at Step S105 the RFDS 41 determines whether the abovementioned air-fuel ratio feedback conditions are fulfilled. In this embodiment, the RFDS 41 determines whether all remaining fuel has been injected or not, according to output of the air-fuel ratio sensor 32.

If the air-fuel ratio feedback conditions are not fulfilled here (NO at Step S105), the RFDS 41 cannot make a determination about injection of remaining fuel and once ends this process without updating the learning value stored in the memory 42d, though there is a significant change in output of the alcohol concentration sensor 25. On the other hand, if the air-fuel ratio feedback conditions are fulfilled (YES at Step S105), the RFDS 41 can make a determination about injection of remaining fuel and, at Step S107, compares the output value of the alcohol concentration sensor 25 (current value) with the learning value stored in the memory 42d.

If the current value is smaller than the learning value (YES at Step S107), the alcohol concentration of the blended fuel in the fuel tank 24 has shifted to the low concentration side, that is, the gasoline concentration of the blended fuel in the fuel tank 24 has shifted to the high concentration side. Therefore, whereas the exhaust of the flex-fuel engine 10 stays stable in the vicinity of the stoichiometric air-fuel ratio after acknowledgement of the significant change in output of the alcohol concentration sensor 25 before injection of all remaining fuel, it becomes much richer than the stoichiometric air-fuel ratio after injection of all remaining fuel. In other words, a significant shift to the rich side occurs in output of the air-fuel ratio sensor 32. Since the air-fuel ratio feedback conditions are fulfilled, the exhaust gas of the flex-fuel engine 10 gradually becomes closer to the stoichiometric air-fuel ratio corresponding to the new concentration or concentration after the change and then comes to stay stable in the vicinity of the stoichiometric air-fuel ratio corresponding to the new concentration.

At Step S109, the RFDS 41 determines whether a significant shift to the rich side in output of the air-fuel ratio sensor 32 has continued for a prescribed period (fourth threshold period). If the period in which a significant shift to the rich side has continued exceeds the fourth threshold period (YES at Step S109), it means that the remaining fuel has been injected and the air-fuel mixture in the combustion chamber 12 has been burned and consumed and at Step S111, the LVUP 42c updates the learning value stored in the memory 42d to the output value of the alcohol concentration sensor 25 loaded at Step S101 and once ends this process. If the period in which a significant shift to the rich side has continued does not exceed the fourth threshold period (NO at Step S109), it means that the remaining fuel has been injected and all the air-fuel mixture in the combustion chamber 12 has not been burned and consumed and thus the LVUP 42c once ends the learning value updating process without updating the learning value stored in the memory 42d.

If the current value is larger than the previous value (NO at Step S107), the alcohol concentration of the blended fuel in the fuel tank 24 has shifted to the high concentration side, namely the gasoline concentration of the blended fuel in the fuel tank 24 has shifted to the low concentration side. Therefore, whereas the exhaust gas of the flex-fuel engine 10 stays stable in the vicinity of the stoichiometric air-fuel ratio after acknowledgement of the significant change in output of the alcohol concentration sensor 25 before injection of all remaining fuel, it becomes much leaner than the stoichiometric air-fuel ratio after injection of all remaining fuel. In other words, a significant shift to the lean side occurs in output of the air-fuel ratio sensor 32.

At Step S113, the RFDS 41 determines whether a significant shift to the lean side in output of the air-fuel ratio sensor 32 has continued for a prescribed period (fourth threshold period). If the period in which a significant shift to the lean side has continued exceeds the fourth threshold period) (YES at Step S113), it means that the remaining fuel has been injected and the air-fuel mixture in the combustion chamber 12 has been burned and consumed and at Step S111, the LVUP 42c updates the learning value stored in the memory 42d to the output value of the alcohol concentration sensor 25 loaded at Step S101 and once ends this process. If the period in which a significant shift to the lean side has continued does not exceed the fourth threshold period (NO at Step S113), it means that the remaining fuel has been injected and all the air-fuel mixture in the combustion chamber 12 has been not burned and consumed and thus the LVUP 42c once ends the learning value updating process without updating the learning value stored in the memory 42d.

While the engine 10 is in operation after warming up (air-fuel ratio feedback control is underway), the basic supply quantity Tm is converted into converted supply quantity Tc with reference to an unupdated learning value (equivalent to the alcohol concentration before the change) after the CCDS 40 acknowledges that a significant change in output of the alcohol concentration sensor 25 has occurred until the fourth threshold period has elapsed. After the CCDS 40 has acknowledged that a significant change in output of the alcohol concentration sensor 25 has occurred and the fourth threshold period has elapsed, the basic supply quantity Tm is converted into a converted supply quantity Tc with reference to the updated learning value (equivalent to the alcohol concentration after the change).

The fourth threshold period is a predetermined time duration which is required to inject all the remaining fuel when the flex-fuel engine 10 is idling. When the flex-fuel engine 10 is idling, the speed at which the quantity of remaining fuel decreases is the slowest, that is the time required to inject all the remaining fuel is the longest. Since the fourth threshold period is predetermined in this way, it is possible to confirm that the remaining fuel has all been injected. However, the present invention is not limited thereto and the fourth threshold period may be shorter than such a period.

Fig. 4 is a timing chart which shows changes in the alcohol concentration of blended fuel stored in the fuel tank 24 (output of the alcohol concentration sensor 25), the alcohol concentration of blended fuel supplied to the combustion chamber 12, and the learning value which the fuel supply controller (SCOP 42b) uses to convert the basic supply quantity Tm into converted supply quantity Tc, in case that the fuel tank is refueled with blended fuel with a alcohol concentration higher than that of the blended fuel in the fuel tank 24.

Referring to Fig. 4, let's assume that blended fuel with an alcohol concentration of d1% is stored in the fuel tank 24 and at time t11, the fuel tank is refueled with blended fuel with an alcohol concentration higher than d1 %.

The alcohol concentration of blended fuel in the fuel tank 24, or the output value of the alcohol concentration sensor 25 (current value) immediately begins shifting to the high concentration side as indicated by the double dot chain line in Fig. 4 and, for example, at time t13 it reaches d3% and stays stable. The output value of the alcohol concentration sensor 25 changes tracing the following trajectory: (t11, d 1) to (t13, d3) to (t16, d3).

The alcohol concentration of blended fuel supplied to the combustion chamber 12 begins shifting to the high concentration side after time t14 as indicated by the single dot chain line in Fig. 4 and at time t16 it reaches d3% and stays stable. The alcohol concentration of blended fuel supplied to the combustion chamber 12 changes tracing the following trajectory: (t11, d1) to (t14, d1) to (t16, d3).

As mentioned above, because blended fuel with the alcohol concentration before the change remains in the fuel path 23, there is a time lag in the time when the alcohol concentration begins to change. The period from t11 to t14 is a time period required to supply all remaining fuel to intake air by the injector 19 and burn and consume the air-fuel mixture in the combustion chamber 12. In the prior art, the output value of the alcohol concentration sensor 25 is immediately used in calculation of the fuel supply quantity and thus in the period from t11 to t16 the alcohol concentration of blended fuel actually supplied to the combustion chamber 12 is not equal to the alcohol concentration used in the calculation. Consequently there occurs a failure to meet the stoichiometric air-fuel ratio, resulting in emission deterioration.

In this embodiment, at time t12 when the output value of the alcohol concentration sensor 25 exceeds d2 (=d1+10)%, the CCDS 40 acknowledges that a significant change in output of the alcohol concentration sensor 25 has occurred and notifies the RFDS 41 thereof. The RFDS 41 supplies all remaining fuel to intake air through the injector 19; because the blended fuel has not been burned and consumed in the combustion chamber 12 yet, it does not notify the LVUP 42c thereof; the LVUP 42c does not update the learning value stored in the memory 42d but keeps it as it is (i.e. d1%) because it is not notified that the remaining fuel has been burned and consumed. Consequently the SCOP 42b uses d1% as the alcohol concentration in converting the basic supply quantity Tm into converted supply quantity Tc. This status continues till time t14.

After t14 when the blended fuel with the alcohol concentration before the change has been all burned and consumed, blended fuel with the new alcohol concentration begins to be supplied. However, since the alcohol concentration used in converting the basic supply quantity Tm into converted supply quantity Tc is kept at d1%, a significant shift to the lean side occurs in the output value of the air-fuel ratio sensor 32. Therefore, the RFDS 41 determines that at time t15 when the above fourth threshold period for continuation of the significant shift has elapsed, the remaining fuel has been burned and consumed, and notifies the LVUP 42c thereof. Upon being notified thereof, the LVUP 42c immediately updates the learning value stored in the memory 42d to the current value (d3%). The SCOP 42b uses d3% as the alcohol concentration in converting the basic supply quantity Tm into converted supply quantity Tc.

The alcohol concentration of blended fuel which the fuel supply controller uses in calculation of the quantity of supply changes tracing the following trajectory: (t11, d1) to (t15, d3) to (t16, d3).

In this embodiment, it is at earliest time t15 when the fourth threshold period has elapsed since the significant change in output of the air-fuel ration sensor 32 that the learning value stored in the memory 42d is updated by the LVUP 42c. Even when the remaining fuel is burned and the blended fuel with the new concentration (d3%) begins being supplied to the combustion chamber 12, the SCOP 42b converts the basic supply quantity into a converted supply quantity based on the concentration before the change (d1%) until the fourth threshold period elapses. Until t15 when the fourth threshold period elapses, the learning value (d1 %) stored in the memory 42d is different from the concentration of blended fuel actually supplied to the combustion chamber 12 (which is changing from d1% to d2%). Even after t15 or the elapse of the fourth threshold period, in the transitional period till t16, the learning value (d3%) stored in the memory 42d is different from the concentration of blended fuel actually supplied to the combustion chamber 12 (which is changing from d2% to d3%).

In the prior art, as described above, the emission deterioration period is from when the blended fuel concentration begins to change until the remaining fuel is burned and consumed (t11 to t16). In this embodiment, the emission deterioration period is at longest the transitional period for concentration change of blended fuel actually supplied to the combustion chamber 12 (t14 to t16). In short, according to this embodiment, the emission deterioration period can be shortened. In addition, it is possible to determine, regardless of the capacity of the fuel path 23, that the remaining fuel has been burned and consumed.

The fuel supply controller 1 according to the present invention is not limited to the above first embodiment but the first embodiment may be modified as follows.

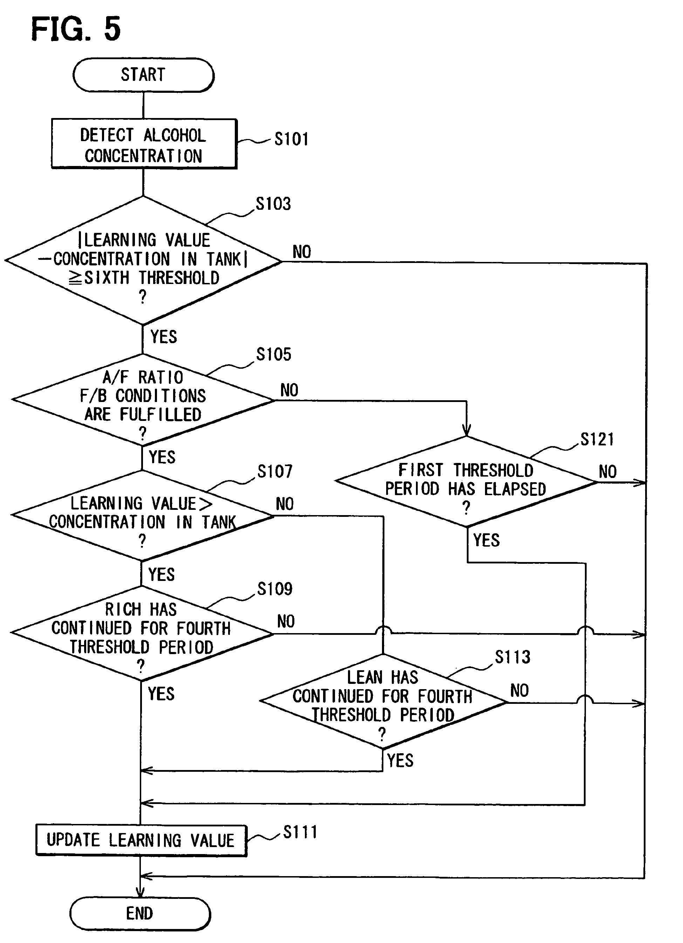

In the first embodiment, as described above, a determination is made based on output of the air-fuel ratio sensor 32 as to whether the remaining fuel has all been injected/supplied and burned/consumed. In the engine starting period, the air-fuel ratio sensor 32 is not activated yet and air-fuel ratio feedback control cannot be made. Also, when the air-fuel ratio sensor 32 is out of order, the output value of the air-fuel ratio sensor 32 is fixed to a given value as a fail-safe measure and air-fuel ratio feedback control cannot be made. Hence, in the first embodiment, when the air-fuel ratio feedback conditions are not fulfilled, namely when the answer is NO at Step S105 in the learning value updating process, a determination about burning/consumption of remaining fuel cannot be made; therefore, even if there is a significant change in output of the alcohol concentration sensor 25, the learning value updating process is ended without updating the learning value stored in the memory 42d. However, the learning value updating process may be modified by adding another determination step S121 as shown in Fig. 5. In the process thus modified, if the air-fuel ratio feedback conditions are not fulfilled (NO at Step S105), at Step S121 the LVUP 42c determines whether the first threshold period has elapsed after acknowledgement of a significant change in output of the alcohol concentration sensor 25 by the CCDS 40. If the first threshold period has elapsed (YES at Step S121), the learning value stored in the memory 42d is updated to the above current value at Step S111.

In this modification of the first embodiment, as shown in Fig. 6, at time t12 when the output value of the alcohol concentration sensor 25 exceeds d2 (=d1+10)%, the CCDS 40 acknowledges that a significant change in output of the alcohol concentration sensor 25 has occurred and notifies the RFDS 41 thereof. The RFDS 41 does not make a determination about burning/consumption of remaining fuel in the period from t12 (time when it is notified) to t 17 (time when the first threshold period elapses). The LVUP 42c does not update the learning value stored in the memory 42d but keeps it as it is (i.e. d1%) because it is not notified that the remaining fuel has been burned and consumed. Consequently the SCOP 42b uses d1% as the alcohol concentration in converting the basic supply quantity Tm into converted supply quantity Tc. This status continues till time t17. In this period from t11 to t17, the learning value stored in the memory 42d is equal to the concentration of blended fuel actually supplied to the combustion chamber 12.

At t17, the RFDS 41 determines that the remaining film has been burned even if actually it has not been burned and consumed and the LVUP 42c, notified thereof, updates the learning value stored in the memory 42d to the current value, i.e. d3%. The SCOP 42b uses d3% as the alcohol concentration in converting the basic supply quantity Tm into converted supply quantity Tc. After t17, although the learning value stored in the memory 42d is different from the concentration of blended fuel actually supplied to the combustion chamber 12 in the period required to burn and consume the remaining fuel (t11 to t14) and the transitional period (t14 to t16) for concentration change of the blended fuel actually supplied to the combustion chamber 12, after these periods (t11 to t14 and t14 to t16), it becomes equal to the concentration of blended fuel actually supplied to the combustion chamber 12 (d3%).

In the prior art, the emission deterioration period is from t11, or time when the blended fuel concentration changes, until t14, or time when the remaining fuel is burned and consumed. In the above modification, the emission deterioration period is shortened to the sum of the time required to burn and consume the blended fuel (t11-t14) and the transitional period for concentration change of blended fuel actually supplied to the combustion chamber 12 (t14-t16) minus the decision time required to acknowledge a significant change in output of the alcohol concentration sensor 25 (t11-t12) minus the fourth threshold period (t12-t17).

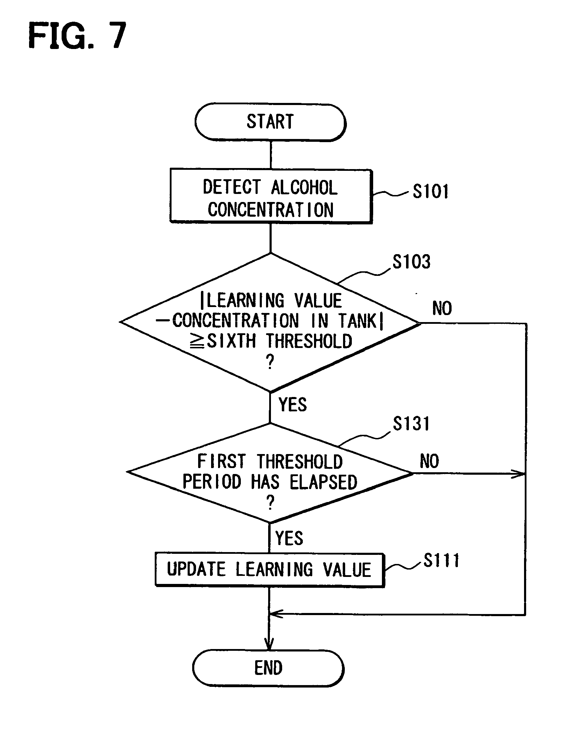

As shown in Fig. 7, the learning value updating process may be modified into a process in which a determination as to whether all remaining fuel has been burned/consumed is not based on output of the air-fuel ratio sensor 32. Specifically, Steps S105 to S109 and Step S113 may be omitted. Referring to Fig. 7, if the LVUP 42c is notified that a significant change has occurred in output of the alcohol concentration sensor 25 (YES at Step S103), without making a determination about fulfillment of the air-fuel ratio feedback conditions, at Step S131 it is determined whether the first threshold period has elapsed from when the CCDS 40 acknowledged a significant change in output of the alcohol concentration sensor 25, and if the first threshold period has elapsed (YES at Step S131), at Step S111 it updates the learning value stored in the memory 42d to the current value. This modified learning value updating process also achieves the desired advantage.

It is desirable to preset the first threshold period to a time longer than the time required to supply the remaining fuel with the flex-fuel engine 10 at its maximum output. Usually the capacity of the fuel path 23 can be measured in advance. When the engine 10 is at its maximum output, it requires the largest quantity of blended fuel and thus consumes fuel at the highest speed. Such a speed can be measured in advance. Hence, the shortest time required to inject/supply all remaining fuel can be previously calculated from the capacity of the fuel path 23 (quantity of remaining fuel) and fuel consumption speed. Hence, by setting the first threshold period to a time longer than the abovementioned shortest time, it is at least possible to reduce emission deterioration reliably.

[Second Embodiment]

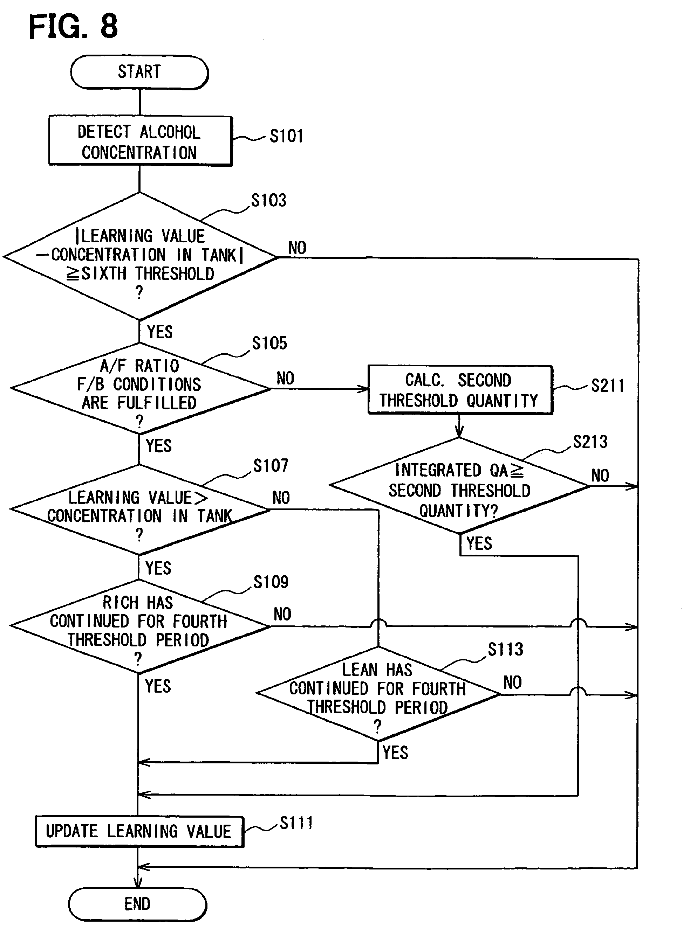

The fuel supply controller of the flex-fuel engine according to a second embodiment of the present invention will be described referring to Fig. 8. Fig. 8 is a flowchart showing the learning value updating process in the second embodiment. The process in this embodiment, similar to that shown in Fig. 5, is a modified version of the process in the first embodiment.

In this embodiment, as shown in Fig. 8, if the air-fuel ratio feedback conditions are not fulfilled (NO at Step S105), Steps S211 and S213 are performed instead of Step S121 in Fig. 5.

If "NO" at Step S105, the RFDS 41 calculates at Step S211 the intake air flow rate required for the engine 10 to burn/consume the remaining fuel (second threshold quantity) from the learning value stored in the memory 42d and the previously measured capacity of the fuel path 23. Then, at Step S213, the RFDS 41 determines whether the integrated intake air flow rate QA calculated from output of an air flow meter exceeds the second threshold quantity. If it is determined that the integrated intake air flow rate exceeds the second threshold quantity (YES at Step S213), it means that as much intake air as required to burn/consume the remaining fuel has been introduced into the combustion chamber 12 and the remaining fuel has been burned and consumed. Hence, at Step S111, the LVUP 42c updates the learning value stored in the memory 42d to the current value. If "NO" at Step S213, it means that the remaining fuel has not been burned and consumed yet. Hence, the LVUP 42c once ends the learning value updating process without updating the learning value stored in the memory 42d. This embodiment has an effect similar to the advantage of the modification of the first embodiment in case the air-fuel ratio feedback conditions are not fulfilled.

The fuel supply controller 1 according to the second embodiment of the present invention is not limited to the one described above. The second embodiment may be modified as follows.

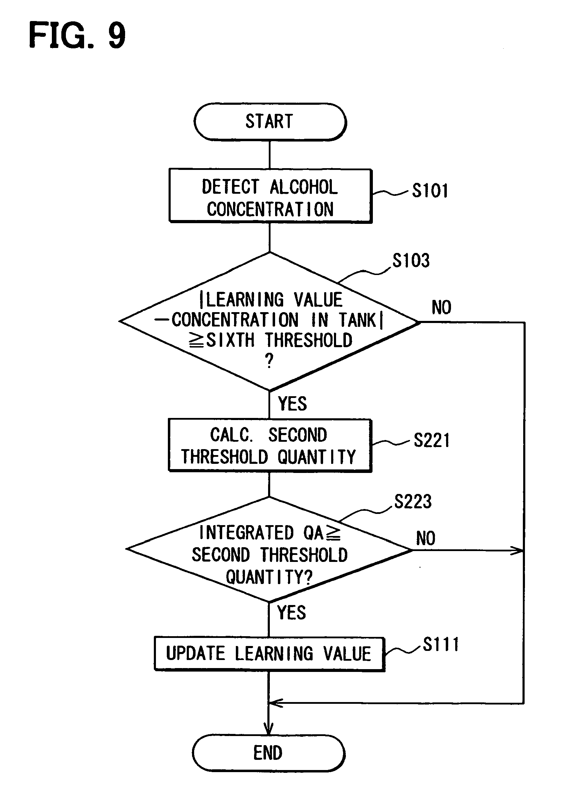

In the second embodiment, as shown in Fig. 9, the learning value-updating process may be modified into a process in which a determination as to whether all remaining fuel has been injected (supplied) and burned (consumed) is not based on output of the air-fuel ratio sensor 32. Specifically, Steps S105 to S109 and Step S113 may be omitted.

Referring to Fig. 9, if the LVUP 42c is notified that a significant change has occurred in output of the alcohol concentration sensor 25 (YES at Step S103), at Step S221 the RFDS 41 calculates the intake air flow rate required for the engine 10 to burn and consume the remaining fuel (second threshold quantity) from the learning value stored in the memory 42d and the previously measured capacity of the fuel path 23. Then, at Step S223, the RFDS 41 determines whether the integrated intake air flow rate QA calculated from output of an air flow meter exceeds the second threshold quantity. If it is determined that the integrated intake air flow rate exceeds the second threshold quantity (YES at Step S223), it means that as much intake air as required to burn and consume the remaining fuel has been introduced into the combustion chamber 12 and the remaining fuel has been burned and consumed. Hence, at Step S111, the LVUP 42c updates the learning value stored in the memory 42d to the current value. If "NO" at Step S223, it means that the remaining fuel has not been burned and consumed yet. Hence, the LVUP 42c once ends the learning value updating process without updating the learning value stored in the memory 42d.

Since generally the intake air flow rate required to burn and consume blended fuel largely varies depending on its concentration, in the second embodiment (Step 211 in Fig. 8) and the modification thereof (Step 221 in Fig. 9) it is calculated from the concentration of blended fuel (learning value) each time. However, instead, the second threshold quantity may be fixed. Usually the lower the alcohol concentration is, the more intake air is required to burn and consume blended fuel. The intake air flow rate required to burn and consume remaining fuel with an alcohol concentration of 0% may be used for such a fixed value (second threshold quantity).

[Third Embodiment]

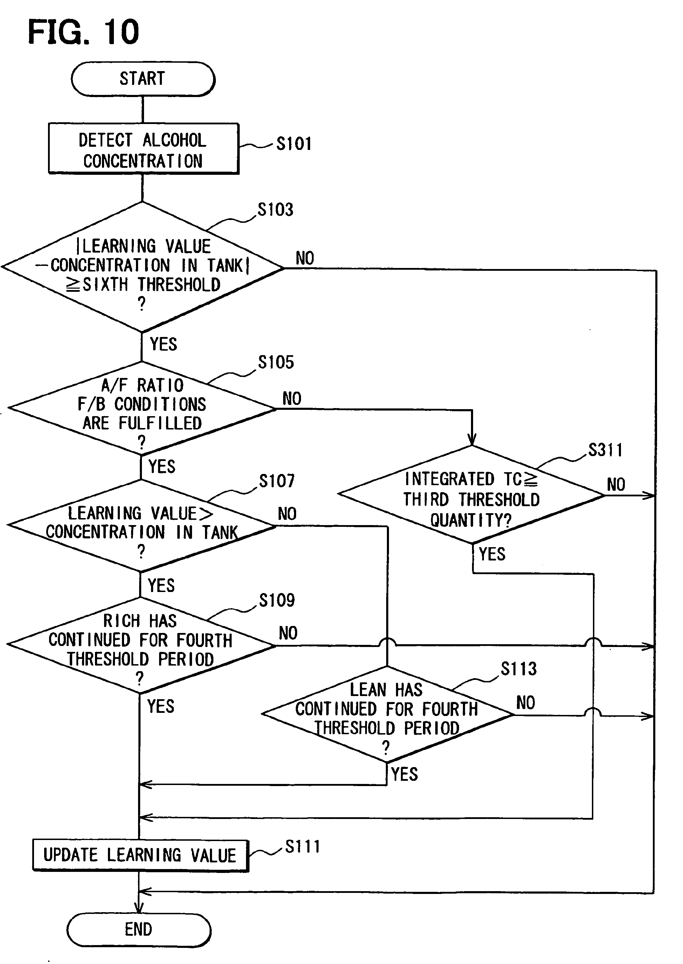

The fuel supply controller of the flex-fuel engine according to a third embodiment of the present invention will be described referring to Fig. 10. Fig. 10 is a flowchart showing the learning value updating process in the third embodiment. The process in this embodiment, similar to those shown in Fig. 5 and Fig. 8, is a modified version of the process in the first embodiment, the modification, and the second embodiment.

In this embodiment, as shown in Fig. 10, if the air-fuel ratio feedback conditions are not fulfilled (NO at Step S105), Step S311 is performed instead of Step S121 or Steps S211 and S213.

If "NO" at Step S105, at Step S311 the RFDS 41 determines whether the integrated converted supply quantity Tc calculated by the supply conversion section 42b exceeds the third threshold quantity which corresponds to the capacity of the fuel path 23 plus a margin. If it is determined that the integrated converted supply quantity Tc exceeds the third threshold quantity (YES at Step S311), it means that blended fuel in the third threshold quantity has been supplied by injection and all the remaining fuel has been supplied by injection. Hence, at Step S111, the LVUP 42c updates the learning value stored in the memory 42d to the current value. If "NO" at Step S311, it means that blended fuel in the third threshold quantity has not been supplied by injection yet and the remaining fuel has not been all supplied by injection yet. Hence, the LVUP 42c once ends the learning value updating process without updating the learning value stored in the memory 42d.

The fuel supply controller 1 according to the third embodiment of the present invention is not limited to the one described above. The third embodiment may be modified as follows.

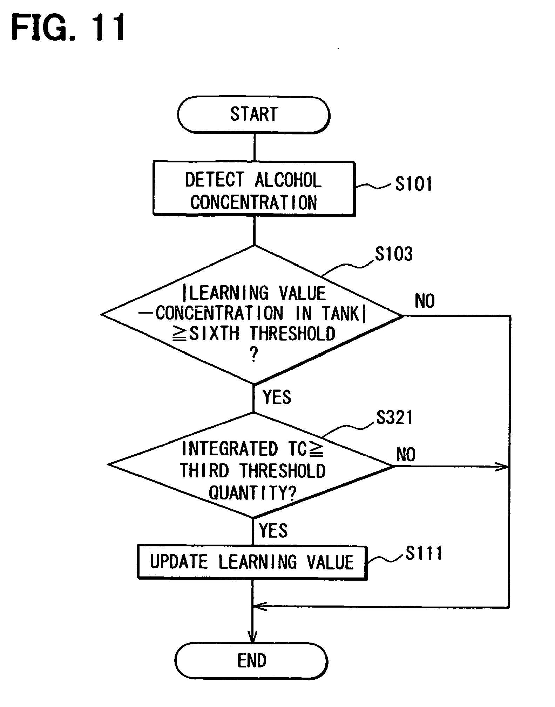

In the third embodiment, as shown in Fig. 11, the learning value updating process may be modified into a process in which a determination as to whether all remaining fuel has been supplied by injection is not based on output of the air-fuel ratio sensor 32. Specifically, Steps S105 to S109 and Step S113 may be omitted.

Referring to Fig. 11, if the LVUP 42c is notified that a significant change has occurred in output of the alcohol concentration sensor 25 (YES at Step S103), at Step S321 the RFDS 41 determines whether the integrated converted supply quantity Tc calculated by the supply conversion section 42b exceeds the third threshold quantity which corresponds to the capacity of the fuel path 23 plus a margin. If it is determined that the integrated converted supply quantity Tc exceeds the third threshold quantity (YES at Step S321), it means that blended fuel in the third threshold quantity has been supplied by injection and all the remaining fuel has been supplied by injection. Hence, at Step S111, the LVUP 42c updates the learning value stored in the memory 42d to the current value. On the other hand, if "NO" at Step S321, it means that blended fuel in the third threshold quantity has not been supplied by injection yet and the remaining fuel has not been all supplied by injection yet. Hence, the LVUP 42c once ends the learning value updating process without updating the learning value stored in the memory 42d.

In this embodiment, the third threshold quantity is predetermined as equivalent to the capacity of the fuel path 23 plus a margin but instead it may be just equivalent to the capacity of the fuel path 23, or with no margin.

[Other Embodiments]

In the above embodiments (including their modifications), the alcohol concentration sensor 25 is located in the fuel tank 24 but it may be located in another place. The quantity of remaining oil is not always considered as equivalent to the capacity of the fuel path 23. Alternatively the alcohol concentration sensor 25 may be installed in the fuel path 23 through which the blended fuel in the fuel tank 24 is supplied to the combustion chamber 12. In this case, the quantity of remaining fuel is equivalent to the capacity of the fuel path's portion from the alcohol concentration sensor 25 to the injector 19. The alcohol concentration sensor 25 need not always rely on the capacitance of blended fuel to detect concentrations. Any other theory of concentration detection may be used for the alcohol concentration sensor 25 as long as the ratio of main fuel to blended fuel can be detected as the concentration of blended fuel.

In the above embodiments (including their modifications), the CCDS 40 acknowledges a significant change when the difference between the learning value and the current value is more than 10% (sixth threshold). This sixth threshold is not limited to 10%. It may be any other value if it is adequate to determine that there is a significant change in output of the alcohol concentration sensor 25.

In the above embodiments (including their modifications), the SCAS 42 includes a BSCP 42a and a SCOP 42b where the former calculates basic supply quantity Tm and the latter converts basic supply quantity Tm into converted supply quantity Tc. However, the SCAS 42 may be otherwise structured as long as it works as follows: from when the CCDS 40 acknowledges a significant change until the RFDS 41 acknowledges supply of all remaining fuel, the quantity of blended fuel to be supplied to the combustion chamber 12 is calculated based on the old concentration (concentration before acknowledgement of the significant change by the CCDS 40), and after the RFDS 41 acknowledges supply of all remaining fuel, the quantity of blended fuel to be supplied to the combustion chamber 12 is calculated based on the new concentration (concentration after acknowledgement of the significant change).

In the above embodiments (including their modifications), alcohol and gasoline are used as the main fuel and sub fuel respectively. Alternatively, the main fuel and the sub fuel may be a blended fuel with a high alcohol concentration and a blended fuel with a low alcohol concentration (high gasoline concentration) respectively. The present invention may be applied to any flex-fuel engine that uses main fuel and sub fuel which is more combustible than the main fuel.

**Claims**

1. A fuel supply controller for a flex-fuel engine which uses blended fuel as a mixture of main fuel and sub fuel, the sub fuel being different in nature from the main fuel,
the flex-fuel engine (10) having a concentration sensor (25) which is located in a fuel path (23) for supply of the blended fuel to an injector (19) or in a fuel tank (24) connected with the fuel path to store the blended fuel and detects a concentration as a ratio of the main fuel to the blended fuel, the flex-fuel engine has an air fuel ratio sensor (32) to detect an air-fuel ratio of blended fuel used for combustion in the combustion chamber;
the fuel supply controller (1) comprising:

   a supply calculation section (42) which calculates the quantity of blended fuel to be supplied to a combustion chamber (12) from a concentration detected by the concentration sensor;
   a supply control section (43) which supplies blended fuel in the quantity calculated by the supply calculation section to the combustion chamber through the injector;
   a concentration change determination section (40) which determines whether a significant change has occurred in concentration detected by the concentration sensor; and
   a remaining fuel supply determination section (41) which, when the significant change has been acknowledged by the concentration change determination section, determines whether all of the remaining blended fuel with a concentration before the acknowledgement of the significant change has been supplied to the flex-fuel engine through the injector in a prescribed quantity depending on location of the concentration sensor;
   wherein,
   in a case that the concentration change determination section (40) acknowledges the significant change and prescribed air-fuel ratio feedback conditions are fulfilled, the remaining fuel supply determination section (41) determines that the remaining fuel has been supplied, when a significant change has occurred in air-fuel ratio detected by the air-fuel ratio sensor; and
   when the remaining fuel supply determination section determines that all of the remaining fuel has been supplied to the combustion chamber, the supply calculation section (42) changes concentration of the blended fuel for use in determination of a target air-fuel ratio for the blended fuel and calculation of supply quantity to maintain the target air-fuel ratio, from a concentration before acknowledgement of the significant change to a concentration after the acknowledgement and then calculates the quantity of blended fuel to be supplied to the combustion chamber.

2. The fuel supply controller for a flex-fuel engine according to Claim 1, wherein, in a case that the concentration change determination section (40) acknowledges the significant change and the prescribed air-fuel ratio feedback conditions are fulfilled, the remaining fuel supply determination section (41) determines that the remaining fuel has been supplied, when the period in which a significant change in air-fuel ratio detected by the air-fuel ratio sensor continues exceeds a fourth threshold period.

3. The fuel supply controller for a flex-fuel engine according to Claim 2, wherein the fourth threshold period is predetermined as being shorter than time required to supply the remaining fuel when the flex-fuel engine is idling.

4. The fuel supply controller for a flex-fuel engine according to any of Claims 1 to 3, wherein, in a case that the concentration change determination section (40) acknowledges the significant change and the prescribed air-fuel ratio feedback conditions are not fulfilled, the remaining fuel supply determination section (41) determines that the remaining fuel has been supplied, when a first threshold period has elapsed from the time of the acknowledgement.

5. The fuel supply controller for a flex-fuel engine according to any of Claims 1 to 3, wherein, in a case that the concentration change determination section (40) acknowledges the significant change and the prescribed air-fuel ratio feedback conditions are not fulfilled, the remaining fuel supply determination section (41) determines that the remaining fuel has been supplied, when an integrated quantity of air introduced into the combustion chamber exceeds a second threshold quantity.

**6.** The fuel supply controller for a flex-fuel engine according to any of Claims 1 to 3, in a case that the concentration change determination section (40) acknowledges the significant change and the prescribed air-fuel ratio feedback conditions are not fulfilled, the remaining fuel supply determination section (41) determines that the remaining fuel has been supplied, when an integration of the supply quantity calculated by the supply calculation section exceeds a third threshold quantity.

**7.** The fuel supply controller for a flex-fuel engine according to any of Claims 1 to 6, wherein:

the supply calculation section (42) further includes:

a basic supply calculation part (42a) which calculates a basic supply quantity of sub fuel to the combustion chamber according to engine operating conditions including intake air flow rate and engine coolant temperature;
a supply conversion part (42b) which converts the basic supply quantity into a converted supply quantity as a quantity of the blended fuel to be supplied to the combustion chamber;
a memory (42d) which stores a learning value used in conversion of the basic supply quantity into the converted supply quantity;
a learning value updating part (42c) which, upon acknowledgement of supply of the remaining fuel, updates the learning value from output value of the concentration sensor before acknowledgement of the significant change to output value after the acknowledgement of the significant change; and
an air-fuel ratio adjustment part (42e) which, when the air-fuel ratio feedback conditions are fulfilled, adjusts the converted supply quantity to a final supply quantity to maintain the air-fuel ratio of the blended fuel at a stoichiometric air-fuel ratio; and
when the air-fuel ratio feedback conditions are fulfilled, the supply control section (43) supplies blended fuel in the final supply quantity to the combustion chamber, and when the air-fuel ratio feedback conditions are not fulfilled, the supply control section supplies blended fuel in the converted supply quantity to the combustion chamber.

**8.** The fuel supply controller for a flex-fuel engine according to Claim 7, wherein the concentration change determination section loads output of the concentration sensor at a fifth threshold time interval and acknowledges the significant change when a difference between the loaded sensor output value and the learning value exceeds a sixth threshold.

**9.** The fuel supply controller for a flex-fuel engine according to any of Claims 4, 7 and 8, wherein the first threshold period is predetermined as longer than time required to supply the remaining fuel with the flex-fuel engine at its maximum output.

**10.** The fuel supply controller for a flex-fuel engine according to any of Claims 5, 7 and 8, wherein the remaining fuel supply determination section calculates the intake air flow rate required for the flex-fuel engine to burn and consume the remaining fuel, from output of the concentration sensor before acknowledgment of the significant change and deems the calculated intake air flow rate the second threshold quantity.

**11.** The fuel supply controller for a flex-fuel engine according to any of Claims 7, 8 and 9, wherein the third threshold quantity is predetermined as equivalent to the quantity of the remaining fuel plus a margin.

**12.** The fuel supply controller for a flex-fuel engine according to any of Claims 1 to 11, wherein the sub fuel is more combustible than the main fuel.

**Patentansprüche**

**1.** Eine Kraftstoffzuführsteuereinrichtung für einen Flexfuel-Motor, der einen gemischten Kraftstoff als eine Mischung eines Hauptkraftstoffs und eines Nebenkraftstoffs verwendet, wobei sich der Nebenkraftstoff von der Art von dem Hauptkraftstoff unterscheidet,
wobei der Flexfuel-Motor (10) einen Konzentrationssensor (25) hat, der sich in einem Kraftstoffpfad (23) zum Zuführen des gemischten Kraftstoffs zu einer Einspritzeinrichtung (19) oder in einen Kraftstofftank (24), der mit dem Kraftstoffpfad verbunden ist, um den gemischten Kraftstoff zu speichern, befindet und der eine Konzentration als ein Verhältnis des Hauptkraftstoffs zum gemischten Kraftstoff erfasst, wobei der Flexfuel-motor einen Luft/Kraftstoff-Verhältnissensor (32) zum Erfassen eines Luft/Kraftstoff-Verhältnisses des gemischten Kraftstoffs, der zur Verbrennung in der Verbrennungskammer verwendet wird, hat,
wobei die Kraftstoffzuführsteuereinrichtung (1) aufweist:

einen Zuführberechnungsabschnitt (42), der die Menge des gemischten Kraftstoffs, der einer Verbrennungskammer (12) zuzuführen ist, aus einer durch den Konzentrationssensor erfassten Konzentration berechnet,
einen Zuführsteuerabschnitt (43), der gemischten Kraftstoff in der Menge, die durch den Zuführberechnungsabschnitt berechnet wurde, der Verbrennungskammer über die Einspritzeinrichtung zuführt,
einen Konzentrationsänderungs-Bestimmungsabschnitt (40), der bestimmt, ob eine deutliche Änderung in der durch den Konzentrationssensor erfassten Konzentration aufgetreten ist, und
einen Bestimmungsabschnitt (41) für die Zuführung des verbleibenden Kraftstoffs, der, wenn die deutliche Änderung durch den Konzentrationsänderungs-Bestimmungsabschnitt wahrgenommen wurde, bestimmt, ob der gesamte verbleibende gemischte Kraftstoff mit einer Konzentration vor dem Wahrnehmen der deutlichen Änderung dem Flexfuel-Motor über die Einspritzeinrichtung in einer vorgeschriebenen Menge zugeführt wurde, und zwar in Abhängigkeit von dem Ort des Konzentrationssensors,
wobei
in einem Fall, in dem der Konzentrationsänderungs-Bestimmungsabschnitt (40) die deutliche Änderung wahrnimmt und die vorgeschriebenen Luft/Kraftstoff-Verhältnis-Bedingungen erfüllt sind, der Bestimmungsabschnitt (41) für die Zuführung des verbleibenden Kraftstoffs bestimmt, dass der verbleibende Kraftstoff zugeführt wurde, wenn eine deutliche Änderung bei dem durch den Luft-Kraftstoff-Sensor erfassten Luft-Kraftstoff-Verhältnis aufgetreten ist, und,
wenn der Bestimmungsabschnitt für die Zuführung des verbleibenden Kraftstoffs bestimmt, dass der gesamte verbleibende Kraftstoff der Verbrennungskammer zugeführt wurde, der Zuführungsberechnungsabschnitt (42) die Konzentration des verbleibenden Kraftstoffs zur Verwendung bei der Bestimmung eines Soll-Luft/Kraftstoffverhältnisses für den gemischten Kraftstoff und bei der Berechnung der Zuführmenge, um das Soll-Luft-Kraftstoff-Verhältnis aufrechtzuerhalten, von einer Konzentration vor dem Wahrnehmen der deutlichen Änderung zu einer Konzentration nach dem Wahrnehmen ändert und dann die Menge des gemischten Kraftstoffs, die der Verbrennungskammer zugeführt werden soll, berechnet.

2. Die Kraftstoffzuführ-Steuereinrichtung für einen Flexfuel-Motor nach Anspruch 1, wobei in einem Fall, in dem der Konzentrationsänderungsbestimmungsabschnitt (40) die deutliche Änderung wahrnimmt und die vorgeschriebenen Luft/Kraftstoff-Verhältnis-. Rückführbedingungen erfüllt sind, der Bestimmungsabschnitt (41) für die Zuführung des verbleibenden Kraftstoffs bestimmt, dass der verbleibende Kraftstoff zugeführt wurde, wenn die Periode, in der eine deutliche Änderung bei dem durch den Luft/Kraftstoff-Verhältnissensor erfassten Luft/Kraftstoff-Verhältnis fortgesetzt wird, eine vierte Schwellwertperiode überschreitet.

3. Die Kraftstoffzuführ-Steuereinrichtung für einen Flexfuel-Motor nach Anspruch 2, wobei die vierte Schwellwertperiode als kürzer als die Zeit bestimmt wird, die erforderlich ist, um den verbleibenden Kraftstoff zuzuführen, wenn der Flexfuel-Motor im Leerlauf ist.

4. Die Kraftstoffzuführ-Steuereinrichtung für einen Flexfuel-Motor nach einem der Ansprüche 1 bis 3, wobei in einem Fall, in dem der Konzentrationsänderungs-Bestimmungsabschnitt (40)- die deutliche Äderung wahrnimmt und die vorgeschriebenen Luft/Kraftstoff-Verhältnis-Rückführbedingungen nicht erfüllt sind, der Bestimmungsabschnitt (41) für das Zuführen des verbleibenden Kraftstoffs bestimmt, dass der verbleibende Kraftstoff zugeführt wurde, wenn eine erste Schwellwertperiode von dem Zeitpunkt des Wahrnehmens vergangen ist.

5. Die Kraftstoffzuführ-Steuereinrichtung für einen Flexfuel-Motor nach einem der Ansprüche 1 bis 3, wobei in einem Fall, in dem der Konzentrationsänderungsbestimmungsabschnitt (40) die deutliche Änderung wahrnimmt und die vorgeschriebenen Luft/Kraftstoff-Verhältnis-Rückführbedingungen nicht erfüllt sind, der Bestimmungsabschnitt (41) für das Zuführen des verbleibenden Kraftstoffs bestimmt, dass der verbleibende Kraftstoff zugeführt wurde, wenn eine integrierte Menge der Luft, die in die Verbrennungskammer eingeführt wurde, eine zweite Schwellwertmenge überschreitet.

6. Die Kraftstoffzuführ-Steuereinrichtung für einen Flexfuel-Motor nach einem der Ansprüche 1 bis 3, wobei in einem Fall, in dem der Konzentrationsänderungs-Bestimmungsabschnitt (40) die deutliche Änderung wahrnimmt und die vorgeschriebenen Luft/Kraftstoff-Verhältnis-Rückführbedingungen nicht erfüllt sind, der Bestimmungsabschnitt (41) für das Zuführen des verbleibenden Kraftstoffs bestimmt, dass der verbleibende Kraftstoff zugeführt wurde, wenn eine Integration der Zuführmenge, die durch den Zuführberechnungsabschnitt berechnet wurde, eine dritte Schwellwertmenge überschreitet.

7. Die Kraftstoffzuführ-Steuereinrichtung für einen Flexfuel-Motor nach einem der Ansprüche 1 bis 6, wobei der Zuführberechnungsabschnitt (42) weiter aufweist:

einen Berechnungsteil (42a) für die grundlegende Zuführung, der eine grundlegende Zuführmenge des Nebenkraftstoffs zur Verbrennungskammer entsprechend Motorbetriebszuständen einschließlich der Einlassströmungsrate und der Motorkühlmitteltemperatur berechnet,
einen Zuführumwandlungsteil (42b), der die grundlegende Zuführmenge in eine umgewandelte Zuführmenge als eine Menge des gemischten Kraftstoffs, die der Verbrennungskammer zugeführt werden soll, umwandelt,
einen Speicher (42d), der einen Lernwert speichert, der bei der Umwandlung der grundlegenden Zuführmenge in die umgewandelte Zuführmenge verwendet wird,
einen Lernwertaktualisierungsteil (42c), der beim Wahrnehmen der Zuführung des verbleibenden Kraftstoffs den Lernwert von dem Ausgabewert des Konzentrationssensors vor dem Wahrnehmen der deutlichen Änderung aktualisiert, um den Wert nach dem Wahrnehmen der deutlichen Änderung auszugeben, und
einen Luft/Kraftstoff-Verhältniseinstellteil (42e), der, wenn die Luft/Kraftstoff-Verhältnis-Rückführbedingungen erfüllt sind, die umgewandelte Zuführmenge in eine Endzuführmenge einstellt, um das Luft/Kraftstoff-Verhältnis des gemischten Kraftstoffs auf einem stöchiometrischen Luft/Kraftstoff-Verhältnis zu halten, und, wenn die Luft/Kraftstoff-Verhältnis-Rückführbedingungen erfüllt sind, der Zuführsteuerabschnitt (43) den gemischten Kraftstoff in der Endzuführmenge der Verbrennungskammer zuführt, und, wenn die Luft/Kraftstoff-Verhältnis-Rückführbedingungen nicht erfüllt sind, der Zuführsteuerabschnitt den gemischten Kraftstoff in der umgewandelten Zuführmenge der Verbrennungskammer zuführt.

8. Die Kraftstoffzuführ-Steuereinrichtung für einen Flexfuel-Motor nach Anspruch 7, wobei der Konzentrationsänderungs-Bestimmungsabschnitt die Ausgabe des Konzentrationssensors an einem fünften Schwellwertzeitintervall lädt und die deutliche Änderung wahrnimmt, wenn eine Differenz zwischen dem geladenen Sensorausgabewert und dem Lernwert einen sechsten Schwellwert überschreitet.

9. Die Kraftstoffzuführ-Steuereinrichtung für einen Flexfuel-Motor nach einem der Ansprüche 4, 7 und 8, wobei die erste Schwellwertperiode als länger als eine Zeit bestimmt wird, die zum Zuführen des verbleibenden Kraftstoffs erforderlich ist, wobei der Flexfuel-Motor seine maximale Ausgabe hat.

10. Die Kraftstoffzuführ-Steuereinrichtung für einen Flexfuel-Motor nach einem der Ansprüche 5, 7 und 8, wobei der Bestimmungsabschnitt für den verbleibenden Kraftstoff die Einlassluft-Strömungsrate, die erforderlich ist, damit der Flexfuel-Motor brennt und den verbleibenden Kraftstoff verbraucht, aus der Ausgabe des Konzentrationssensors vor dem Wahrnehmen der deutlichen Änderung berechnet und die berechnete Ansaug-Luftströmungsrate als die zweite Schwellwertmenge annimmt.

11. Die Kraftstoffzuführ-Steuereinrichtung für einen Flexfuel-Motor nach einem der Ansprüche 7, 8 und 9, wobei die dritte Schwellwertmenge als äquivalent zur Menge des verbleibenden Kraftstoffs mit dem Zusatz einer Toleranz bestimmt wird.

12. Die Kraftstoffzuführ-Steuereinrichtung für einen Flexfuel-Motor nach einem der Ansprüche 1 bis 11, wobei der Nebenkraftstoff stärker brennbar als der Hauptkraftstoff ist.

**Revendications**

1. Dispositif de commande d'alimentation de carburant pour un moteur polycarburant qui utilise un mélange à savoir un mélange de carburant principal et de carburant secondaire, le carburant secondaire ayant une nature différente de celle du carburant principal,
le moteur polycarburant (10) ayant un détecteur de concentration (25) qui se trouve sur un chemin de carburant (23) destiné à amener le mélange à un injecteur (19) ou dans un réservoir de carburant (24) relié au chemin de carburant pour stocker le mélangé et détecter une concentration sous la forme d'un rapport entre le carburant principal et le mélange, le moteur polycarburant ayant un détecteur de rapport air/carburant (32) pour détecter un rapport air/carburant du mélange utilisé pour une combustion dans la chambre de combustion ;

le dispositif de commande d'alimentation de carburant (1) comprenant :

une section de calcul d'alimentation (42) qui calcule la quantité de mélange devant être fournie à une chambre de combustion (12) à partir d'une concentration détectée par le détecteur de concentration ;

une section de commande d'alimentation (43) qui fournit la quantité de mélange calculée par la section de calcul d'alimentation à la chambre de combustion par l'intermédiaire de l'injecteur ;

une section de détermination de modification de la concentration (40) qui détermine si une modification significative de la concentration détectée par le détecteur de concentration s'est produite ; et

une section de détermination de la quantité de carburant restant (41) qui, lorsque la modification significative a été reconnue par la section de détermination de modification de la concentration, détermine si tout le mélange restant à une concentration avant la reconnaissance de la modification significative a été amené au moteur polycarburant par l'intermédiaire de l'injecteur en une quantité prescrite dépendant de l'emplacement du détecteur de concentration ;

dans lequel

dans un cas où la section de détermination de modification de la concentration (40) reconnait la modification significative et où les conditions prescrites de rétroaction du rapport air/carburant sont satisfaites, la section de détermination de la quantité de carburant restant (41) détermine que le carburant restant a été fourni, quand une modification significative s'est produite dans le rapport air/carburant détecté par le détecteur de rapport air/carburant ; et

lorsque la section de détermination de la quantité de carburant restant détermine que tout le carburant restant a été amené à la chambre de combustion, la section de calcul d'alimentation (42) modifie la concentration du mélange à utiliser pour la détermination d'un rapport air/carburant cible du mélange et le calcul de la quantité fournie pour maintenir le rapport air/carburant cible, d'une concentration avant la reconnaissance de la modification significative en une concentration après la reconnaissance, puis calcule la quantité de mélange devant être fournie à la chambre de combustion.

2. Dispositif de commande d'alimentation de carburant pour un moteur polycarburant selon la revendication 1, dans lequel, dans un cas où la section de détermination de modification de la concentration (40) reconnait la modification significative et où les conditions prescrites de rétroaction du rapport air/carburant sont satisfaites, la section de détermination de la quantité de carburant restant (41) détermine que le carburant restant a été fourni, quand la période durant laquelle une modification significative du rapport air/carburant détectée par le détecteur de rapport air/carburant continue de dépasser une quatrième période seuil.

3. Dispositif de commande d'alimentation de carburant pour un moteur polycarburant selon la revendication 2, dans lequel la quatrième période seuil est prédéterminée comme étant plus courte que le temps requis pour fournir le carburant restant quand le moteur polycarburant est au ralenti.

4. Dispositif de commande d'alimentation de carburant pour un moteur polycarburant selon l'une quelconque des revendications 1 à 3, dans lequel, dans un cas où la section de détermination de modification de la concentration (40) reconnait la modification significative et où les conditions prescrites de rétroaction du rapport air/carburant ne sont pas satisfaites, la section de détermination de la quantité de carburant restant (41) détermine que le carburant restant a été fourni, quand une première période seuil s'est écoulée depuis le moment de la reconnaissance.

5. Dispositif de commande d'alimentation de carburant pour un moteur polycarburant selon l'une quelconque des revendications 1 à 3, dans lequel, dans un cas où la section de détermination de modification de la concentration (40) reconnait la modification significative et où les conditions prescrites de rétroaction du rapport air/carburant ne sont pas satisfaites, la section de détermination de la quantité de carburant restant (41) détermine que le carburant restant a été fourni, quand une quantité intégrée d'air introduite dans la chambre de combustion dépasse une deuxième quantité seuil.

6. Dispositif de commande d'alimentation de carburant pour un moteur polycarburant selon l'une quelconque des revendications 1 à 3, dans lequel, dans un cas où la section de détermination de modification de la concentration (40) reconnait la modification significative et où les conditions prescrites de rétroaction du rapport air/carburant ne sont pas satisfaites, la section de détermination de la quantité de carburant restant (41) détermine que le carburant restant a été fourni, quand une intégration de la quantité fournie calculée par la section de calcul d'alimentation dépasse une troisième quantité seuil.

7. Dispositif de commande d'alimentation de carburant pour un moteur polycarburant selon l'une quelconque des revendications 1 à 6, dans lequel :

la section de calcul d'alimentation (42) comprend en outre :

une partie de calcul d'alimentation de base (42a) qui calcule une quantité fournie de base de carburant secondaire dans la chambre de combustion en fonction des conditions de fonctionnement du moteur incluant un débit d'air d'admission et une température du liquide de refroidissement du moteur ;

une partie de conversion d'alimentation (42b) qui convertit la quantité fournie de base en une quantité fournie convertie comme une quantité de mélange devant être fournie à la chambre de combustion ;

une mémoire (42d) qui stocke une valeur d'apprentissage utilisée lors de la conversion de la quantité fournie de base en quantité fournie convertie ;

une partie de mise à jour de valeur d'apprentissage (42c) qui, lors de la reconnaissance de la fourniture du carburant restant, met à jour la valeur d'apprentissage d'une valeur de sortie du détecteur de concentration avant la reconnaissance de la modification significative à une valeur de sortie après la reconnaissance de la modification significative ; et

une partie de réglage du rapport air/carburant (42e) qui, lorsque les conditions de rétroaction du rapport air/carburant sont satisfaites, règle la quantité fournie convertie sur une quantité fournie finale pour maintenir le rapport air/carburant du mélange à un rapport air/carburant stoechiométrique ; et

lorsque les conditions de rétroaction du rapport air/carburant sont satisfaites, la section de commande d'alimentation (43) fournit le mélange dans la quantité fournie finale à la chambre de combustion, et lorsque les conditions de rétroaction du rapport air/carburant ne sont pas satisfaites, la section de commande d'alimentation fournit le mélange dans la quantité fournie convertie à la chambre de combustion.

8. Dispositif de commande d'alimentation de carburant pour un moteur polycarburant selon la revendication 7, dans lequel la section de détermination de modification de la concentration charge la sortie du détecteur de concentration à un cinquième intervalle de temps seuil et reconnait la modification significative quand une différence entre la valeur de sortie chargée du détecteur et la valeur d'apprentissage dépasse un sixième seuil.

9. Dispositif de commande d'alimentation de carburant pour un moteur polycarburant selon l'une quelconque des revendications 4, 7 et 8, dans lequel la première période seuil est prédéterminée comme étant plus longue que le temps requis pour fournir le carburant restant lorsque le moteur polycarburant est à sa puissance maximale.

10. Dispositif de commande d'alimentation de carburant pour un moteur polycarburant selon l'une quelconque des revendications 5, 7 et 8, dans lequel la section de détermination de la quantité de carburant restant calcule le débit d'air d'admission requis pour que le moteur polycarburant brûle et consomme le carburant restant, à partir de la sortie du détecteur de concentration avant la reconnaissance de la modification significative et estime que le débit d'air d'admission calculé est la deuxième quantité seuil.

11. Dispositif de commande d'alimentation de carburant pour un moteur polycarburant selon l'une quelconque des revendications 7, 8 et 9, dans lequel la troisième quantité seuil est prédéterminée comme étant équivalente à la quantité de carburant restant plus une marge.

12. Dispositif de commande d'alimentation de carburant pour un moteur polycarburant selon l'une quelconque des revendications 1 à 11, dans lequel le carburant secondaire est plus combustible que le carburant principal.

# FIG. 1

FUEL SUPPLY CONTROLLER

CCDS — 40

RFDS — 41

SCAS — 42

BSCP — 42a

SCOP — 42b

LVUP — 42c

MEMORY — 42d

ARAP — 42e

SCOS — 43

EP 1 985 831 B1

# FIG. 2

# FIG. 4

# FIG. 6

# FIG. 3

```
              ┌─────────────┐
              │    START    │
              └─────────────┘
                     │
              ┌──────────────────┐
              │  DETECT ALCOHOL   │──── S101
              │  CONCENTRATION    │
              └──────────────────┘
                     │
                   S103
              ╱────────────────╲
             ╱ |LEARNING VALUE   ╲        NO
            ╱ −CONCENTRATION IN TANK|╲──────────────────────┐
             ╲ ≧SIXTH THRESHOLD  ╱                          │
              ╲      ?          ╱                           │
               ╲──────────────╱                            │
                     │ YES                                 │
                   S105                                    │
              ╱────────────────╲                          │
             ╱   A/F RATIO      ╲        NO                │
            ╱  F/B CONDITIONS    ╲──────────────────────────┤
             ╲  ARE FULFILLED    ╱                          │
              ╲      ?          ╱                           │
               ╲──────────────╱                            │
                     │ YES                                 │
                   S107                                    │
              ╱────────────────╲                          │
             ╱  LEARNING VALUE > ╲        NO               │
            ╱  CONCENTRATION IN TANK╲────────┐             │
             ╲       ?           ╱           │             │
              ╲──────────────╱               │             │
                     │ YES                   │             │
                   S109                      │             │
              ╱────────────────╲             │             │
             ╱   RICH HAS        ╲     NO     │             │
            ╱ CONTINUED FOR FOURTH╲───────────┤             │
             ╲ THRESHOLD PERIOD  ╱            │             │
              ╲      ?          ╱         S113 │             │
               ╲──────────────╱      ╱──────────────╲       │
                     │ YES          ╱   LEAN HAS     ╲  NO  │
                     │             ╱ CONTINUED FOR FOURTH╲──┤
                     │              ╲ THRESHOLD PERIOD  ╱   │
                     │               ╲      ?         ╱    │
                     │                ╲──────────────╱     │
                     │                     │ YES           │
                     │◄────────────────────┘               │
              ┌──────────────────┐                         │
              │ UPDATE LEARNING  │──── S111                 │
              │     VALUE        │                         │
              └──────────────────┘                         │
                     │                                     │
                     │◄────────────────────────────────────┘
              ┌─────────────┐
              │     END     │
              └─────────────┘
```

# FIG. 5

```
              ┌─────────────┐
              │    START    │
              └──────┬──────┘
                     │
          ┌──────────┴──────────┐
          │   DETECT ALCOHOL    │──── S101
          │   CONCENTRATION     │
          └──────────┬──────────┘
                     │
                    S103
              ╱──────┴──────╲
          │LEARNING VALUE          NO
     ╱  −CONCENTRATION IN TANK│ ───────────────────────────┐
      ╲    ≧SIXTH THRESHOLD   ╱                             │
              ╲   ?  ╱                                       │
                │ YES                                        │
                    S105                                     │
              ╱──────┴──────╲                                │
              │  A/F RATIO  │       NO                       │
              │ F/B CONDITIONS ────────────┐                 │
              │ ARE FULFILLED │            │                 │
                 ╲    ?   ╱                │                 │
                │ YES                      ▼                 │
                    S107              ╱────────╲   S121       │
           ╱──────┴──────╲           │ FIRST THRESHOLD │ NO   │
           │LEARNING VALUE> │  NO    │ PERIOD HAS ELAPSED ────┤
           │CONCENTRATION IN TANK────┐   ╲    ?   ╱           │
              ╲    ?   ╱         │        │ YES               │
                │ YES            │                            │
                    S109        │                            │
          ╱──────┴──────╲       │                            │
          │  RICH HAS   │  NO   │                            │
          │CONTINUED FOR FOURTH───┤                          │
          │THRESHOLD PERIOD│     │                            │
             ╲    ?   ╱          │    ╱────────╲  S113         │
                │ YES            │   │ LEAN HAS │              │
                                 │   │CONTINUED FOR FOURTH NO  │
                                 │   │THRESHOLD PERIOD ────────┤
                                 │      ╲    ?   ╱             │
                                 │        │ YES               │
                     ◄───────────┘        │                   │
                     ◄────────────────────┘                   │
          ┌──────────┴──────────┐                             │
          │ UPDATE LEARNING VALUE│──── S111                   │
          └──────────┬──────────┘                             │
                     │◄───────────────────────────────────────┘
              ┌──────┴──────┐
              │     END     │
              └─────────────┘
```

# FIG. 7

```
            ┌──────────────┐
            │    START     │
            └──────┬───────┘
                   │
        ┌──────────┴──────────┐
        │  DETECT ALCOHOL     │──── S101
        │  CONCENTRATION      │
        └──────────┬──────────┘
                   │
                   │              S103
              ╱────┴────╲
             ╱           ╲
            ╱ |LEARNING   ╲        NO
           ╱   VALUE       ╲
          ╱ -CONCENTRATION  ╲──────────┐
          ╲   IN TANK|      ╱          │
           ╲ ≧SIXTH        ╱           │
            ╲ THRESHOLD   ╱            │
             ╲    ?      ╱             │
              ╲────┬────╱              │
                 YES                   │
                   │          S131     │
              ╱────┴────╲              │
             ╱           ╲     NO       │
            ╱ FIRST       ╲────────────┼──→
            ╲ THRESHOLD   ╱            │
             ╲ PERIOD HAS╱             │
              ╲ ELAPSED ╱              │
               ╲   ?   ╱               │
                ╲──┬──╱                │
                 YES                   │
        ┌──────────┴──────────┐        │
        │ UPDATE LEARNING     │──── S111│
        │ VALUE               │        │
        └──────────┬──────────┘        │
                   │←──────────────────┘
                   ↓
            ┌──────────────┐
            │     END      │
            └──────────────┘
```

# FIG. 8

```
                    ┌─────────┐
                    │  START  │
                    └────┬────┘
                         │
              ┌──────────┴──────────┐
              │  DETECT ALCOHOL     │──── S101
              │  CONCENTRATION      │
              └──────────┬──────────┘
                         │
                    ╱────┴────╲  S103
                   ╱ |LEARNING  ╲        NO
                  ╱  VALUE        ╲──────────────────────────────────────┐
                 ╲ —CONCENTRATION ╱                                       │
                  ╲ IN TANK|     ╱                                        │
                   ╲≧SIXTH      ╱                                         │
                    ╲THRESHOLD ╱                                          │
                     ╲  ?    ╱                                            │
                      ╲────╱                                             │
                        │ YES                                            │
                    ╱───┴───╲  S105                   ┌──────────────┐   │
                   ╱  A/F     ╲       NO              │ CALC. SECOND │   │
                  ╱  RATIO     ╲────────────────────▶│  THRESHOLD   │─── S211
                  ╲ F/B        ╱                      │  QUANTITY    │   │
                   ╲CONDITIONS╱                       └──────┬───────┘   │
                    ╲ARE      ╱                              │           │
                     ╲FULFILLED╱                            │           │
                      ╲ ?   ╱                          ╱─────┴─────╲ S213 │
                       ╲──╱                           ╱ INTEGRATED  ╲ NO  │
                        │ YES                        ╱  QA≧          ╲────┤
                    ╱───┴───╲  S107                  ╲  SECOND       ╱    │
                   ╱ LEARNING╲      NO                ╲ THRESHOLD   ╱     │
                  ╱  VALUE>    ╲─────────────┐         ╲QUANTITY?  ╱      │
                  ╲CONCENTRATION╱            │          ╲───┬───╱        │
                   ╲ IN TANK   ╱             │              │ YES         │
                    ╲  ?     ╱               │              │             │
                     ╲────╱                  │              │             │
                        │ YES                │              │             │
                    ╱───┴───╲  S109          │              │             │
                   ╱  RICH HAS ╲    NO        │              │             │
                  ╱ CONTINUED   ╲─────────────┤              │             │
                  ╲ FOR FOURTH  ╱             │              │             │
                   ╲THRESHOLD  ╱        ╱─────┴─────╲ S113    │             │
                    ╲PERIOD   ╱        ╱  LEAN HAS   ╲  NO     │             │
                     ╲ ?    ╱        ╱ CONTINUED     ╲────────┤             │
                      ╲──╱          ╲ FOR FOURTH    ╱         │             │
                        │ YES        ╲THRESHOLD    ╱          │             │
                        │             ╲PERIOD ?  ╱            │             │
                        │              ╲───┬───╱              │             │
                        │                  │ YES              │             │
                        │◀─────────────────┘                  │             │
                        │◀───────────────────────────────────┘             │
              ┌─────────┴──────────┐                                       │
              │ UPDATE LEARNING    │──── S111                              │
              │ VALUE              │                                       │
              └─────────┬──────────┘                                       │
                        │◀──────────────────────────────────────────────────┘
                    ┌───┴───┐
                    │  END  │
                    └───────┘
```

# FIG. 9

START

DETECT ALCOHOL
CONCENTRATION — S101

|LEARNING VALUE
—CONCENTRATION IN TANK|
$\geqq$ SIXTH THRESHOLD
? — S103

NO

YES

CALC. SECOND
THRESHOLD QUANTITY — S221

INTEGRATED QA$\geqq$
SECOND THRESHOLD
QUANTITY? — S223

NO

YES

UPDATE LEARNING VALUE — S111

END

# FIG. 10

```
                    ┌─────────┐
                    │  START  │
                    └────┬────┘
                         │
              ┌──────────────────┐
              │ DETECT ALCOHOL   │─── S101
              │ CONCENTRATION    │
              └────────┬─────────┘
                       │
              ╱────────────────────╲
            ╱ |LEARNING VALUE        ╲ ── S103
          ╱ —CONCENTRATION IN TANK|    ╲   NO
          ╲   ≧SIXTH THRESHOLD        ╱ ─────────────────────────┐
            ╲        ?              ╱                             │
              ╲──────────────────╱                               │
                       │ YES                                     │
              ╱────────────────╲                                 │
            ╱    A/F RATIO       ╲ ── S105                        │
          ╱   F/B CONDITIONS       ╲  NO                         │
          ╲    ARE FULFILLED      ╱ ──────────┐                  │
            ╲       ?           ╱              │                 │
              ╲──────────────╱                 ▼                 │
                     │ YES            ╱──────────────╲           │
              ╱───────────────╲     ╱  INTEGRATED TC≧ ╲── S311   │
            ╱ LEARNING VALUE>   ╲  ╱ THIRD THRESHOLD   ╲  NO     │
            ╲ CONCENTRATION IN TANK╲ QUANTITY?        ╱ ─────────┤
              ╲      ?         ╱ NO  ╲──────────────╱            │
                ╲──────────╱ ──────┐       │ YES                 │
                     │ YES         │       │                     │
              ╱───────────────╲    │       │                     │
            ╱   RICH HAS        ╲── S109    │                     │
          ╱ CONTINUED FOR FOURTH ╲  NO      │                     │
          ╲ THRESHOLD PERIOD    ╱ ──┐       │                     │
            ╲      ?          ╱     │       │                     │
              ╲────────────╱        │       │                     │
                 │ YES     ╱──────────────╲ │                     │
                 │       ╱   LEAN HAS       ╲── S113              │
                 │     ╱ CONTINUED FOR FOURTH╲  NO               │
                 │     ╲ THRESHOLD PERIOD   ╱ ──────────────────►│
                 │       ╲     ?          ╱                       │
                 │         ╲───────────╱ YES                      │
                 │◄──────────────┘                               │
                 │◄──────────────────────────────┘               │
       ┌──────────────────────┐                                  │
       │ UPDATE LEARNING VALUE│─── S111                          │
       └──────────┬───────────┘                                  │
                  │◄──────────────────────────────────────────────┘
             ┌────────┐
             │  END   │
             └────────┘
```

26

# FIG. 11

```
                    ┌──────────────┐
                    │    START     │
                    └──────────────┘
                           │
                    ┌──────────────┐
                    │ DETECT ALCOHOL│ ～S101
                    │ CONCENTRATION │
                    └──────────────┘
                           │
                          ╱ ╲  S103
                        ╱     ╲
                      ╱ |LEARNING╲       NO
                    ╱ VALUE        ╲────────────┐
                    ╲ −CONCENTRATION╱            │
                      ╲ IN TANK|  ╱              │
                        ╲≧SIXTH ╱                │
                          ╲?   ╱                 │
                           │YES                  │
                          ╱ ╲  S321              │
                        ╱     ╲                  │
                      ╱INTEGRATED╲    NO          │
                    ╱ TC≧THIRD    ╲──────────────┼──→
                    ╲ THRESHOLD   ╱              │
                      ╲QUANTITY?╱                │
                        ╲     ╱                  │
                          ╲ ╱                    │
                           │YES                  │
                    ┌──────────────┐             │
                    │UPDATE LEARNING│ ～S111      │
                    │    VALUE     │             │
                    └──────────────┘             │
                           │←───────────────────┘
                    ┌──────────────┐
                    │     END      │
                    └──────────────┘
```

**EP 1 985 831 B1**

## REFERENCES CITED IN THE DESCRIPTION

### Patent documents cited in the description

- JP 2003120363 A
- US 6758201 B2
- GB 2335055 A